(19) Europäisches Patentamt
European Patent Office
Office européen des brevets

(11) **EP 4 472 319 A1**

(12) **EUROPEAN PATENT APPLICATION**
published in accordance with Art. 153(4) EPC

(43) Date of publication:
**04.12.2024  Bulletin 2024/49**

(21) Application number: **23746244.5**

(22) Date of filing: **19.01.2023**

(51) International Patent Classification (IPC):
*H04W 72/04* (2023.01)

(52) Cooperative Patent Classification (CPC):
**H04L 5/00; H04W 72/04; H04W 72/0446;
H04W 74/08**

(86) International application number:
**PCT/CN2023/073125**

(87) International publication number:
**WO 2023/143363 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.01.2022  CN 202210096534**

(71) Applicant: **Spreadtrum Semiconductor (Nanjing)
Co., Ltd.
Nanjing, Jiangsu 211899 (CN)**

(72) Inventor: **LEI, Zhenzhu
Nanjing, Jiangsu 211899 (CN)**

(74) Representative: **Mewburn Ellis LLP
Aurora Building
Counterslip
Bristol BS1 6BX (GB)**

(54) **COMMUNICATION METHOD AND APPARATUS**

(57)  A communication method and apparatus are provided in embodiments of the disclosure. The method includes the following. Obtain first configuration information. The first configuration information includes physical random access channel (PRACH) occasion (RO) information, and the RO information is used to determine a target RO group. Transmit a first message according to the target RO group and first target repetition number. The target RO group corresponds to a target synchronization signal/physical broadcast channel (SS/PBCH) block (SSB). The number of ROs in the target RO group is *N*. In the method, uplink coverage enhancement can be effectively realized.

FIG. 3

**Description**

TECHNICAL FIELD

Embodiments of the disclosure relate to the field of communication technology, and in particular to a communication method and a communication apparatus.

BACKGROUND

With the further evolution of the 5-th generation (5G) communication technologies, the demand for uplink coverage enhancement in various communication scenarios has increased, especially for uplink coverage enhancement for random access procedures.
In general, the most direct way to enhance uplink coverage is to repeat transmissions.
Therefore, how to repeat transmissions of an uplink message is a problem to be solved currently.

SUMMARY

A communication method and apparatus are provided in embodiments of the disclosure, which can effectively realize uplink coverage enhancement.
In a first aspect, a communication method is provided in embodiments of the disclosure. The method is applied to a first communication apparatus and includes the following. Obtain first configuration information. The first configuration information includes physical random access channel (PRACH) occasion (RO) information, and the RO information is used to determine at least a target RO group. Transmit a first message according to the target RO group and the first target repetition number. The target RO group corresponds to a target synchronization signal/physical broadcast channel (SS/PBCH) block (SSB). The number of ROs in the target RO group is $N$, the first target repetition number is less than or equal to $N$, and $N$ is an integer greater than 0.
It may be understood that the SSB illustrated in embodiments of the disclosure may also be referred to as a synchronization signal/physical broadcast channel block. The first target repetition number illustrated in embodiments of the disclosure may indicate the repetition number of the first message.
In embodiments of the disclosure, a time-frequency resource (i.e., the target RO group) for transmitting the first message is determined via the target SSB, and the repetition number of the first message is determined by the first target repetition number, so that uplink repeated transmissions performed by the terminal device may be reasonably realized, and uplink coverage enhancement may be effectively realized.
In a possible implementation, prior to transmitting the first message according to the target RO group and the first target repetition number, the method further includes obtaining second configuration information. The second configuration information indicates at least one first repetition number, and the first target repetition number is one of the at least one first repetition number.
In embodiments of the disclosure, a second communication apparatus configures the second configuration information, so that the first communication apparatus can reasonably determines the first target repetition number according to the at least one first repetition number indicated by the second configuration information.
In a possible implementation, the number of ROs in the target RO group is the same value as the maximum repetition number among the at least one first repetition number.
In embodiments of the disclosure, the first communication apparatus can determine the number of ROs in the target RO group according to the maximum repetition number among the at least one first repetition number, so that the RO group may be suitable for different repetition numbers.
In a possible implementation, a value of $N$ is configured by the second communication apparatus.
In a possible implementation, resources corresponding to the $N$ ROs in the target RO group are consecutive in time domain, the target RO group is one of at least one RO group, and the at least one RO group is obtained according to the RO information and $N$.
In a possible implementation, prior to transmitting the first message according to the target RO group and the first target repetition number, the method further includes obtaining the at least one RO group by performing RO grouping according to $N$ and the RO information. Resources corresponding to $N$ ROs in each RO group are consecutive in the time domain. The target RO group is one of the at least one RO group.
In a possible implementation, the at least one RO group is an RO group within an association period between SSBs and ROs.
In a possible implementation, the target SSB is an SSB in an SSB candidate set transmitted by the second communication apparatus, and each SSB in the SSB candidate set transmitted by the second communication apparatus has a correspondence with an RO group.

In a possible implementation, each of the at least one RO group is first sorted in increasing order of frequency resource indexes, and then sorted in increasing order of time resource indexes.

In a possible implementation, SSBs in the SSB candidate set are mapped to the at least one RO group in increasing order of indexes of the SSBs in the SSB candidate set in the case where the SSBs in the SSB candidate set are mapped to the at least one RO group.

In a possible implementation, the SSBs in the SSB candidate set actually transmitted by the second communication apparatus sorted in the increasing order of the indexes of the SSBs correspond to the sorted at least one RO group in sequence from front to back.

In a possible implementation, the target RO group corresponds to at least one SSB, where the at least one SSB includes the target SSB, and the at least one SSB is at least one SSB in the SSB candidate set transmitted by the second communication apparatus.

In a possible implementation, the at least one SSB is mapped to indexes of preambles corresponding to the target RO group in increasing order of the indexes of the preambles corresponding to the target RO group in the case where the at least one SSB is mapped to the indexes of the preambles corresponding to the target RO group.

In a possible implementation, at least one index of the at least one SSB sorted in increasing order is sequentially mapped to the indexes of the preambles corresponding to the target RO group sorted in increasing order.

In a possible implementation, each SSB among the at least one SSB corresponds to at least one preamble, at least one index of at least one preamble corresponding to an SSB with a relatively large index is larger than at least one index of at least one preamble corresponding to an SSB with a relatively small index, and the at least one preamble is a preamble(s) corresponding to the target RO.

In a possible implementation, the target RO group is determined according to the target SSB, and the target SSB is an SSB of which signal quality is greater than a preset threshold in measurement results of SSBs in an SSB candidate set transmitted to the first communication apparatus by the second communication apparatus.

In a possible implementation, the first target repetition number is obtained according to at least one of: signal quality between the first communication apparatus and the second communication apparatus, ephemeris information, or position information.

In embodiments of the disclosure, the ephemeris information may include ephemeris information of the second communication apparatus, and the position information may include position information between the first communication apparatus and the second communication apparatus. For example, the position information includes a global navigation satellite system (GNSS).

That is, the first target repetition number may satisfy at least one of the first target repetition number is determined according to signal quality between the first communication apparatus and the second communication apparatus; the first target repetition number is obtained according to ephemeris information; the first target repetition number is obtained according to a GNSS; or the first target repetition number is configured by the second communication apparatus.

In a possible implementation, the method further includes the following. Receive a second message from the second communication apparatus. Transmit a third message according to the second target repetition number. The second target repetition number represents the repetition number of the third message, and the second target repetition number corresponds to the first target repetition number. Receive a fourth message from the second communication apparatus.

In a possible implementation, the second target repetition number is the repetition number among at least one second repetition number corresponding to the first target repetition number.

In a possible implementation, prior to transmitting the third message according to the second target repetition number, the method further includes obtaining third configuration information. The third configuration information is used to configure a correspondence between a value of each first repetition number among at least one first repetition number and a value of the second repetition number, and the value of each first repetition number corresponds to at least one value of at least one second repetition number.

In a possible implementation, prior to transmitting the third message according to the second target repetition number, the method further includes receiving indication information. The indication information indicates the second target repetition number among the at least one second repetition number corresponding to the first target repetition number.

In a possible implementation, the indication information is carried in a modulation and coding scheme (MCS) indicator field in downlink control information (DCI) via which the second message is scheduled.

In a second aspect, a communication method is provided in embodiments of the disclosure. The method is applied to a second communication apparatus and includes the following. Transmit first configuration information. The first configuration information includes RO information, and the RO information is used to determine at least a target RO group. Receive a first message. The first message is carried in the target RO group, the number of ROs in the target RO group is $N$, and $N$ is an integer greater than 0. Determine a target SSB according to the target RO group. The target SSB corresponds to the target RO group. Transmit a second message according to the target SSB.

In a possible implementation, the method further includes transmitting second configuration information. The second configuration information indicates at least one first repetition number, and the at least one first repetition number is used to determine the repetition number of the first message.

In a possible implementation, the number of ROs in the target RO group is the same value as the maximum repetition number among the at least one first repetition number.

In a possible implementation, a value of $N$ is configured by the second communication apparatus.

In a possible implementation, resources corresponding to the $N$ ROs in the target RO group are consecutive in time domain, the target RO group is one of at least one RO group, and the at least one RO group is obtained according to the RO information and $N$.

In a possible implementation, the at least one RO group is an RO group within an association period between SSBs and ROs.

In a possible implementation, the target SSB is an SSB in an SSB candidate set transmitted by the second communication apparatus, and each SSB in the SSB candidate set transmitted by the second communication apparatus has a correspondence with an RO group.

In a possible implementation, each of the at least one RO group is first sorted in increasing order of frequency resource indexes, and then sorted in increasing order of time resource indexes.

In a possible implementation, SSBs in the SSB candidate set are mapped to the at least one RO group in increasing order of indexes of the SSBs in the SSB candidate set in the case where the SSBs in the SSB candidate set are mapped to the at least one RO group.

In a possible implementation, the target RO group corresponds to at least one SSB, where the at least one SSB includes the target SSB, and the at least one SSB is at least one SSB in the SSB candidate set transmitted by the second communication apparatus.

In a possible implementation, the at least one SSB is mapped to indexes of preambles corresponding to the target RO group in increasing order of the indexes of the preambles corresponding to the target RO group in the case where the at least one SSB is mapped to the indexes of the preambles corresponding to the target RO group.

In a possible implementation, the method further includes transmitting third configuration information. The third configuration information is used to configure a correspondence between a value of each first repetition number among the at least one first repetition number and a value of the second repetition number. The correspondence between the value of each first repetition number among the at least one first repetition number and the value of the second repetition number is used to determine the repetition number of a third message.

In a possible implementation, the method further includes transmitting indication information. The indication information indicates the second target repetition number among at least one second repetition number corresponding to the first target repetition number. The first target repetition number is the repetition number of the first message, and the second target repetition number is the repetition number of the third message.

In a possible implementation, the indication information is carried in an MCS indicator bit field in DCI via which the second message is scheduled.

In a third aspect, a communication apparatus is provided in embodiments of the disclosure. The communication apparatus is configured to perform the method in the first aspect or in any one of possible implementations of the first aspect. The communication apparatus includes a unit configured to perform the method in the first aspect or in any one of possible implementations of the first aspect.

In a fourth aspect, a communication apparatus is provided in embodiments of the disclosure. The communication apparatus is configured to perform the method in the second aspect or in any one of possible implementations of the second aspect. The communication apparatus includes a unit configured to perform the method in the second aspect or in any one of possible implementations of the second aspect.

In the third aspect or the fourth aspect, the communication apparatus above may include a transceiving unit and a processing unit.

In a fifth aspect, a communication apparatus is provided in embodiments of the disclosure. The communication apparatus includes a processor. The processor is configured to perform the method in the first aspect or in any one of possible implementations of the first aspect. Optionally, the processor is configured to execute programs stored in a memory, and when the programs are executed, the method in the first aspect or in any one of possible implementations of the first aspect may be performed.

In a possible implementation, the memory is located outside the communication apparatus above.

In a possible implementation, the memory is located in the communication apparatus above.

In embodiments of the disclosure, the processor and the memory may also be integrated into a device, i.e., the processor and the memory may also be integrated together.

In a possible implementation, the communication apparatus may further include a transceiver, where the transceiver is configured to receive or transmit a signal.

In a six aspect, a communication apparatus is provided in embodiments of the disclosure. The communication apparatus includes a processor. The processor is configured to perform the method in the second aspect or in any one of possible implementations of the second aspect. Optionally, the processor is configured to execute programs stored in a memory, and when the programs are executed, the method in the second aspect or in any one of possible implementations of the second aspect may be performed.

In a possible implementation, the memory is located outside the communication apparatus above.

In a possible implementation, the memory is located in the communication apparatus above.

In a possible implementation, the processor and the memory may also be integrated into a device, i.e., the processor and the memory may also be integrated together.

In a possible implementation, the communication apparatus may further include a transceiver, where the transceiver is configured to receive or transmit a signal.

In a seventh aspect, a communication apparatus is provided in embodiments of the disclosure. The communication apparatus includes a logic circuit and an interface, where the logic circuit is coupled to the interface. The interface is configured to input and/or output a signal. The logic circuit is configured to execute code instructions, so that the method in the first aspect or in any one of possible implementations of the first aspect may be performed.

It may be understood that for specific illustration of the seventh aspect, reference may be made to the first aspect, which will not be described in detail herein.

In an eighth aspect, a communication apparatus is provided in embodiments of the disclosure. The communication apparatus includes a logic circuit and an interface, where the logic circuit is coupled to the interface. The interface is configured to input and/or output a signal. The logic circuit is configured to execute code instructions, so that the method in the second aspect or in any one of possible implementations of the second aspect may be performed.

It may be understood that for specific illustration of the eighth aspect, reference may be made to the second aspect, which will not be described in detail herein.

In a ninth aspect, a computer-readable storage medium is provided in embodiments of the disclosure. The computer-readable storage medium is configured to store computer programs. When the computer programs run on a computer, the method in the first aspect or in any one of possible implementations of the first aspect may be performed.

In a tenth aspect, a computer-readable storage medium is provided in embodiments of the disclosure. The computer-readable storage medium is configured to store computer programs. When the computer programs run on a computer, the method in the second aspect or in any one of possible implementations of the second aspect may be performed.

In an eleventh aspect, a computer program product is provided in embodiments of the disclosure. The computer program product includes computer programs or computer codes. When the computer programs or computer codes run on a computer, the method in the first aspect or in any one of possible implementations of the first aspect may be performed.

In a twelfth aspect, a computer program product is provided in embodiments of the disclosure. The computer program product includes computer programs or computer codes. When the computer programs or computer codes run on a computer, the method in the second aspect or in any one of possible implementations of the second aspect may be performed.

In a thirteenth aspect, a computer program is provided in embodiments of the disclosure. When the computer program runs on a computer, the method in the first aspect or in any one of possible implementations of the first aspect may be performed.

In a fourteenth aspect, a computer program is provided in embodiments of the disclosure. When the computer program runs on a computer, the method in the second aspect or in any one of possible implementations of the second aspect may be performed.

In a fifteenth aspect, a module device is provided in embodiments of the disclosure. The module device includes a communication module, a power module, a storage module, and a chip module. The power module is configured to power the module device. The storage module is configured to store data and instructions. The communication module is configured to perform internal communication of the module device, or is configured to perform communication between the module device and an external device. The chip module is configured to perform the method in the first aspect or in any one of possible implementations of the first aspect.

In a sixteenth aspect, a module device is provided in embodiments of the disclosure. The module device includes a communication module, a power module, a storage module, and a chip module. The power module is configured to power the module device. The storage module is configured to store data and instructions. The communication module is configured to perform internal communication of the module device, or is configured to perform communication between the module device and an external device. The chip module is configured to perform the method in the second aspect or in any one of possible implementations of the second aspect.

In a seventeenth aspect, a wireless communication system is provided in embodiments of the disclosure. The wireless communication system includes a terminal device and a network device. The terminal device is configured to perform the method in the first aspect or in any one of possible implementations of the first aspect. The network device is configured to perform the method in the second aspect or in any one of possible implementations of the second aspect.

For technical effects realized in the above second to seventeenth aspects, reference may be made to the technical effects of the first aspect or beneficial effects in method embodiments illustrated below, which will not be repeated herein.

BRIEF ILLUSTRATION OF THE DRAWINGS

FIG. 1a is a schematic diagram illustrating a communication system provided in embodiments of the disclosure.

FIG. 1b is another schematic diagram illustrating a communication system provided in embodiments of the disclosure.

FIG. 2 is a schematic flow chart illustrating a random access method provided in embodiments of the disclosure.

FIG. 3 is a schematic flow chart illustrating a communication method provided in embodiments of the disclosure.

FIG. 4a and FIG. 4b are schematic diagrams illustrating physical random access channel (PRACH) occasion (RO) configurations provided in embodiments of the disclosure.

FIG. 5a and FIG. 5b are schematic diagrams illustrating RO grouping provided in embodiments of the disclosure.

FIG. 6 is another schematic flow chart illustrating a communication method provided in embodiments of the disclosure.

FIGs. 7 to 9 are schematic structural diagrams illustrating a communication apparatus provided in embodiments of the disclosure.

DESCRIBED IN DETAIL DESCRIPTION

In order to make purposes, technical solutions, and advantages of the disclosure clearer, the following will further describe in detail the disclosure with reference to accompanying drawings.
The terms "first", "second", and the like used in the specification, the claims, and the accompanying drawings of the disclosure are used to distinguish different objects rather than describe a particular order. In addition, the terms "include", "comprise", and "have" as well as variations thereof are intended to cover non-exclusive inclusion. For example, a process, method, system, product, or apparatus including a series of operations or units is not limited to the listed operations or units. On the contrary, it can optionally include other operations or units that are not listed. Alternatively, other operations or units inherent to the process, method, product, or device can be included either.
The term "embodiment" referred to herein means that a particular feature, structure, or feature described in conjunction with the embodiment may be contained in at least one embodiment of the disclosure. Phrases appearing in various places in the specification do not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.
In the disclosure, "at least one (piece)" means one or more, "multiple" means two or more, and "at least two (pieces)" means two or three or more. The term "and/or" describes an association relationship between associated objects and represents that three relationships may exist. For example, "A and/or B" may represent: only A exists, only B exists, and both A and B exist, where A and B may be singular or plural. The character "/" generally indicates an "or" relationship between associated objects. The expression "at least one (piece) of" or equivalents thereof refers to any combination of the terms. For example, at least one (piece) of $a$, $b$, or $c$ may mean: $a$, $b$, $c$, $a$ and $b$, $a$ and $c$, $b$ and $c$, or $a$, $b$, and $c$.
The communication method provided in the disclosure may be applied to various communication systems, for example, an internet of things (IoT) system, a narrow band internet of things (NB-IoT) system, a long-term evolution (LTE) system, a 5-th (5G) system, and a 6-th generation (6G) system. For another example, the method provided in embodiments of the disclosure may also be applied to a non-terrestrial network (NTN) communication system.

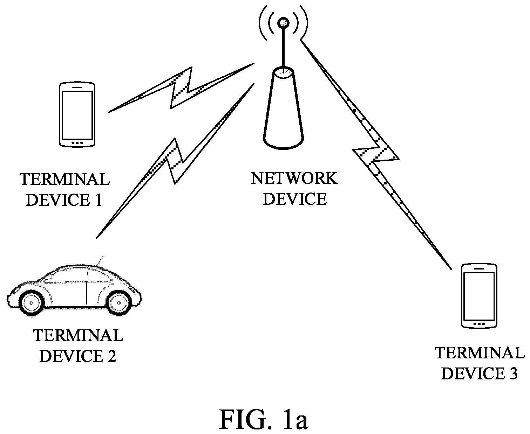

FIG. 1a is a schematic diagram illustrating an architecture of a communication system provided in embodiments of the disclosure. As illustrated in FIG. 1a, the communications system includes a network device and a terminal device. It may be understood that, FIG. 1a only exemplarily illustrates three terminal devices, but the number of the terminal devices illustrated in FIG. 1a may not be understood as a limitation to embodiments of the disclosure.
Exemplarily, the network device may be a next generation node B (gNB), a next generation evolved node B (ng-eNB), a network device (such as a base station) in future 6G communication, etc. The network device may be any type of device with wireless transmission and reception functions, including but not limited to the base station illustrated above (including base stations deployed on satellites). Optionally, the network device may also be an access node, a wireless relay node, a wireless backhaul node, etc. in a wireless fidelity (WiFi) system. Optionally, the network device may be a wireless controller in a cloud radio access network (CRAN) scenario. Optionally, the network device may be a wearable device, a vehicle-mounted device, etc. Optionally, the network device may also be a small station, a transmission and reception point (TRP) (or also referred to as a transmission point), etc. It may be understood that the network device may also be a base station or the like in a future evolved public land mobile network (PLMN).

In some deployments, the base station (such as a gNB) may be composed of a centralized unit (CU) and a distributed unit (DU). The functions of the base station in the access network are split, some of the functions of the base station are deployed in one CU, and the remaining functions is deployed in the DU. Multiple DUs share one CU, which can save costs and facilitate network expansion. In other deployments of the base station, the CU may also be divided into a CU-control plane (CP) and a CU-user plane (UP). In some deployments of the base station, the base station may also be an open radio access network (ORAN) architecture, etc. The specific type of the base station is not specifically limited in the disclosure.

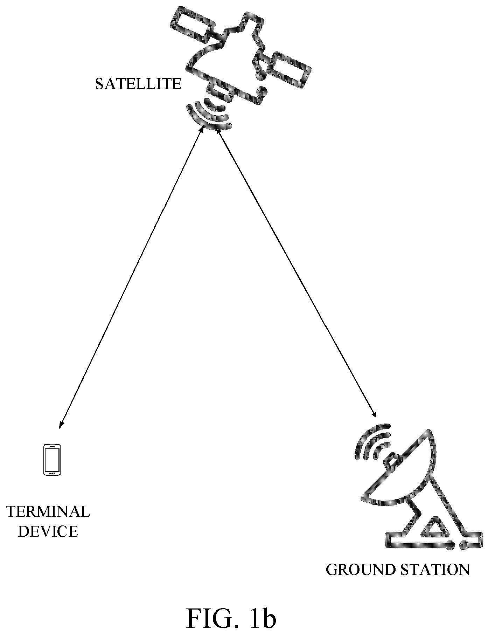

Optionally, the network device illustrated in embodiments of the disclosure may also be a satellite or ground station as illustrated in FIG. 1b. For example, when the satellite operates in a transparent mode, the satellite has a function of relay forwarding. The ground station has a function of a base station or part of the function of the base station, and in this case, the ground station may be regarded as a base station. Optionally, the base station may be deployed separately from the ground station, and delay of a feeder link includes two parts: delay from the satellite to the ground station and delay from the ground station to the base station. When the satellite operates in a regenerative mode, the satellite has a data processing function, the function of the base station, or part of the function of the base station, and in this case, the satellite may be regarded as a base station.

Exemplarily, the terminal device may also be referred to as a user equipment (UE), a terminal, etc. The terminal device is a device with wireless transceiving functions. The terminal device may be deployed on land, including indoor or outdoor, handheld, wearable, or vehicle-mounted; or on water, e.g., a ship. The terminal device may be a mobile phone (e.g., terminal device 1 and terminal device 3 illustrated in FIG. 1a), a pad, a computer with wireless transceiving functions, a terminal device for virtual reality (VR), a terminal device for augmented reality (AR), a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. It may be understood that the terminal device may also be a terminal device in the 6G network or a terminal device in the future evolved PLMN. It may be understood that the terminal device illustrated in the disclosure may be a vehicle in the internet of vehicles (such as terminal device 2 in FIG. 1a). For the sake of simplicity, the following will refer to the terminal device as UE to explain a method provided in embodiments of the disclosure.

The network architecture and service scenarios described in embodiments of the disclosure are intended to more clearly illustrate the technical solutions of embodiments of the disclosure and do not constitute a limitation to the technical solutions provided in embodiments of the disclosure. Those of ordinary skill in the art may appreciate that, with the evolution of the network architecture and emergence of new service scenarios, the technical solutions provided in embodiments of the disclosure are also applicable to similar technical problems.

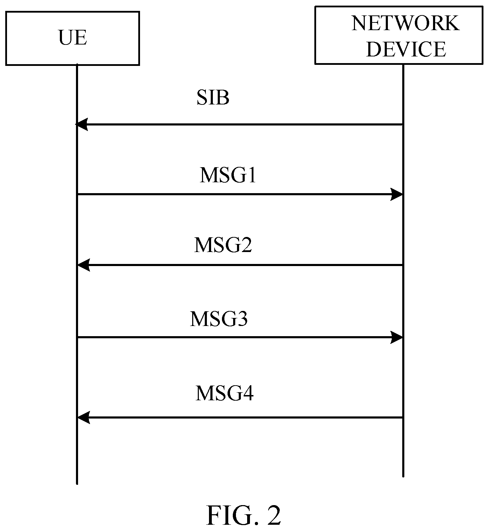

FIG. 2 is a schematic flow chart illustrating a random access method provided in embodiments of the disclosure. As illustrated in FIG. 2, an UE may complete downlink synchronization by reading a master information block (MIB) and/or a system information block (SIB) (e.g., SIB1). For example, by reading SIB1, the UE may determine a resource over which the UE transmits a preamble to a network device to indicate an intention of the UE to access the network device. From this, the UE may transmit message 1 (Msg1) to the network device over the resource determined by the UE, where Msg1 may also be referred to as a random access preamble. In the case where the network device receives Msg1 correctly, the network device may transmit to the UE message 2 (Msg2) scrambled by a random access-radio network temporary identity (RA-RNTI), where Msg2 may also be referred to as a random access response (RAR) message. Meanwhile, after the UE transmits Msg1, the UE may monitor Msg2 from the network device via an RA-RNTI and descramble Msg2. Msg2 may contain timing advance (TA), a temporary cell-RNTI (TC-RNTI), power correction, and an indication indicating a resource over which the UE transmits message 3 (Msg3).

After the UE receives Msg2, the UE then transmits Msg3 over an uplink resource indicated by Msg2. Msg3 is carried in a physical uplink shared channel (PUSCH). Msg3 may carry a unique user identity.

Finally, after the network device receives Msg3 from the UE, the network device returns a contention resolution message to the UE that succeeds in access, where the contention resolution message also is referred to as message 4 (Msg4). The network device may carry in the contention resolution message the unique user identity in Msg3 to indicate the UE that succeeds in access, and other UEs that fail in access may re-initiate random access.

It may be understood that the random access method illustrated in FIG. 2 is only an example and may not be understood as a limitation to embodiments of the disclosure. Meanwhile, for an initial random access method in non-terrestrial network (NTN), there are relatively high round-trip-delay (RTT) (e.g., up to 600ms for synchronous satellites) and propagation delay difference (e.g., up to 16ms for synchronous satellites) in NTN. For the random access method in NTN, reference may also be made to FIG. 2, which will not be described in detail herein.

A communication method and apparatus are provided in embodiments of the disclosure, so that uplink coverage enhancement can be efficiently realized by means of repeated transmissions.

Before describing the method provided in embodiments of the disclosure, the terms involved in embodiments of the disclosure are described in detail below.

1. The first target repetition number

[0093] The first target repetition number indicates the repetition number of a first message. The case that the first target repetition number indicates the repetition number of the first message may be understood as that the first target repetition number indicates the total transmission number of the first message. Optionally, the first target repetition number may be predefined by a standard. For example, at least one first repetition number may be predefined by the standard, and then the UE autonomously determines the repetition number of the first message performed by the UE. Optionally, the first target repetition number may be one of at least one first repetition number (e.g., at least one first repetition number indicated by second configuration information illustrated below) delivered by the network device, and then the UE autonomously determines the number of times the UE transmits the first message.

Exemplarily, the first target repetition number is obtained according to at least one of: channel quality between the UE and the network device, ephemeris information, or position information. The ephemeris information may be ephemeris information obtained by the network device (e.g., a satellite communication system illustrated in FIG. 1b). The position information may be position information between the UE and the network device, e.g., the position information may be obtained via a global navigation satellite system (GNSS). Several manners in which the first target repetition number is determined are exemplarily described below.

A. The first target repetition number is determined according to signal quality between the UE and the network device.
For example, in the case where the signal quality between the UE and the network device is relatively good (e.g., reference signal received power (RSRP) between the UE and the network device is greater than or equal to an RSRP threshold), the first target repetition number may be the transmission number taking a relatively small value among at least one first repetition number. In the case where the signal quality between the UE and the network device is relatively poor (e.g., the RSRP between the UE and the network device is less than the RSRP threshold), the first target repetition number may be the transmission number taking a relatively large value among at least one first repetition number.

B. The first target repetition number is obtained according to ephemeris information.
For example, in the case where the UE determines that a distance between the UE and the network device is relatively long (e.g., the distance between the UE and the network device is greater than or equal to a distance threshold) according to the ephemeris information, the first target repetition number may be the transmission number taking a relatively large value among at least one first repetition number. For another example, in the case where the UE determines that the distance between the UE and the network device is relatively short (e.g., the distance between the UE and the network device is less than the distance threshold) according to the ephemeris information, the first target repetition number may be the transmission number taking a relatively small value among at least one first repetition number.

C. The first target repetition number is obtained according to position information.
For example, in the case where the UE determines that a distance between the UE and the network device is relatively long (e.g., the distance between the UE and the network device is greater than or equal to a distance threshold) according to the GNSS, the first target repetition number may be the transmission number taking a relatively large value among at least one first repetition number. For another example, in the case where the UE determines that the distance between the UE and the network device is relatively short (e.g., the distance between the UE and the network device is less than the distance threshold) according to the GNSS, the first target repetition number may be the transmission number taking a relatively small value among at least one first repetition number.

It may be understood that the three cases illustrated above may be used individually or may be used in combination. For example, in the case where the RSRP between the UE and the network device is greater than the RSRP threshold and the distance between the UE and the network device is less than the distance threshold, the first target repetition number may be the minimum transmission number among at least one first repetition number. For another example, in the case where the RSRP between the UE and the network device is greater than the RSRP threshold or in the case where the distance between the UE and the network device is less than the distance threshold, the first target repetition number may be the transmission number taking a relatively small value among at least one first repetition number. For yet another example, in the case where the RSRP between the UE and the network device is not greater than the RSRP threshold and the distance between the UE and the network device is not less than the distance threshold, the first target repetition number may be the maximum transmission number among at least one first repetition number.

D. The first target repetition number is the transmission number randomly determined by the UE from at least one first repetition number.

That is, the UE may determine the first target repetition number from at least one first repetition number according to at least one of signal quality between the UE and the network device, ephemeris information, a GNSS, or random determination of the first target repetition number from the at least one first repetition number.

Exemplarily, in the case where the first target repetition number is one of at least one first repetition number delivered by the network device, the network device may determine the at least one first repetition number according to at least one of: a. at least one first repetition number at a cell level configured for the UE according to a distance between a cell coverage area and a satellite; b. at least one first repetition number at a beam level configured for the UE according to a distance between each beam coverage area in a cell and the satellite; or c. at least one first repetition number at a cell level configured for the UE according to the distance between each beam coverage area in a cell and the satellite.

For example, the network device may determine at least one first repetition number at a cell level according to a distance between the satellite and the nearest position to a satellite in a cell coverage area. The network device may determine the distance between the nearest position and the satellite according to ephemeris information of the satellite and position information of the nearest position to the satellite in the cell coverage area. Generally, the larger the distance between the satellite and the nearest position to the satellite in the cell coverage area, the larger the value of at least one first repetition number at a cell level determined by the network device. In another case, the network device may determine at least one first repetition number at a beam level according to the distance between the satellite and the nearest position to the satellite in each beam coverage area in the cell as well as the beam coverage area, i.e., determines at least one first repetition number corresponding to each beam. The network device may determine the distance between the nearest position and the satellite according to the ephemeris information of the satellite and position information of the nearest position to the satellite in each beam coverage area. Generally, the larger the distance between the satellite and the nearest position to the satellite in a beam coverage area and the beam coverage area, the larger the value of at least one first repetition number at a beam level determined by the network device.

It may be understood that the above manners in which the network device configures at least one first repetition number are only examples and may not be understood as a limitation to embodiments of the disclosure.

## 2. Target synchronization signal/physical broadcast channel (SS/PBCH) block (SSB)

A target physical random access channel (PRACH) occasion (RO) group corresponds to a target SSB, e.g., the target RO group is determined according to the target SSB. The target SSB may be understood as an SSB in an SSB candidate set actually transmitted by the network device. For example, the target SSB may be an SSB of which received signal quality is relatively good in the SSB candidate set actually transmitted by the network device. That is, the UE measures received signal quality of each SSB in the SSB candidate set actually transmitted by the network device, and then selects an SSB of which received signal quality is relatively good as the target SSB. Optionally, the target SSB may be an SSB of which received signal quality is the best in the SSB candidate set actually transmitted by the network device. Optionally, the target SSB may be any one of SSBs of which received signal quality is in the top three in the SSB candidate set actually transmitted by the network device. Optionally, the target SSB may be any one of SSBs of which received signal quality is greater than a preset threshold in the SSB candidate set actually transmitted by the network device. The preset threshold is used to measure signal quality between the UE and the network device. The embodiments of the disclosure do not limit the specific value of the preset threshold. The embodiments of the disclosure do not limit the specific method for determining the target SSB.

## 3. RO

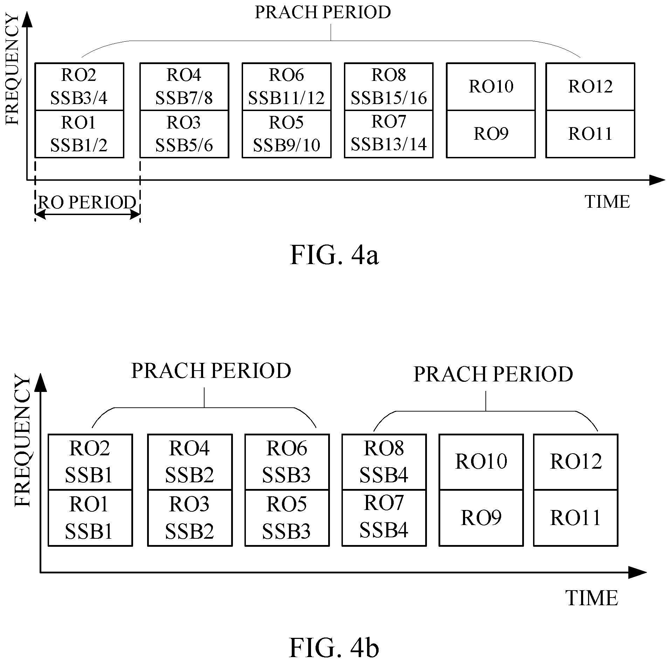

An RO is a time-frequency resource used to carry a random access preamble (hereinafter referred to as a preamble) or may be referred to as a time-frequency resource used to carry Msg1. The RO may also be referred to as a PRACH occasion. A PRACH period (i.e., a period of a resource for preamble transmission) may include multiple ROs that are periodically distributed in time domain, where the period may be referred to as an RO period (exemplarily refer to FIG. 4a), and each period may include one or more ROs. Different ROs may be distinguished by frequency-domain resources, i.e., ROs corresponding to the same time-domain resource but different frequency-domain resources may be different ROs. Different ROs may also be distinguished by time-domain resources, i.e., ROs corresponding to the same frequency-domain resource but different time-domain resources may be different ROs.

4. Target RO group

The number of ROs in the target RO group is *N,* and *N* is an integer greater than 0. A value of *N* is greater than or equal to the first target repetition number. Exemplarily, the number of ROs in the target RO group may be the same as a value of any one repetition number among at least one first repetition number. For example, the number of ROs in the target RO group may be the same as a value of the maximum repetition number among at least one first repetition number. For another example, the number of ROs in the target RO group may be the same as a value of the second largest repetition number among at least one first repetition number, or may be the same as a value of the other repetition number, which is not limited herein.

It may be understood that the illustration of the first target repetition number, the target SSB, and the target RO group is also adapted below. In order to avoid redundancy, each of these is not described in detail below.

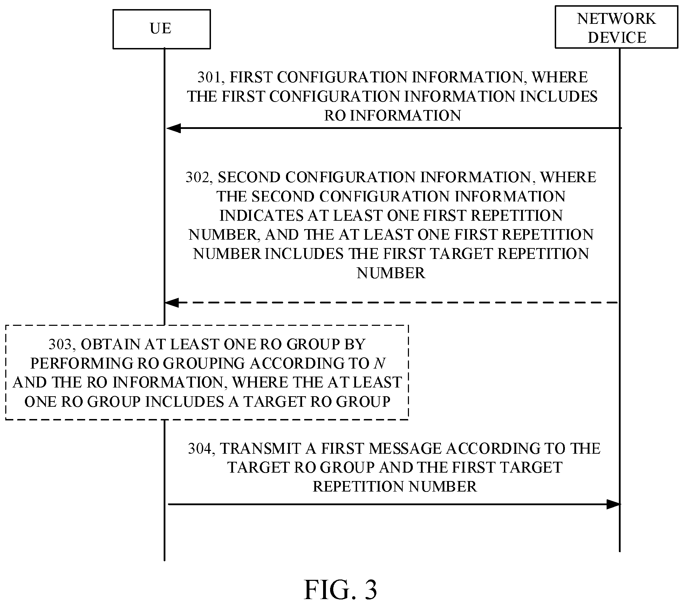

FIG. 3 is a schematic flow chart illustrating a communication method provided in embodiments of the disclosure. The method may be applied to a first communication apparatus and a second communication apparatus. For example, the first communication apparatus may include a terminal device or a chip disposed in the terminal device, and the second communication apparatus may include a network device or a chip disposed in the network device. The method may be applied to a communication system illustrated in FIG. 1a or a communication system illustrated in FIG. 1b, which will not be described in detail herein. For ease of illustration, the method provided in embodiments of the disclosure is illustrated below using an example that the first communication apparatus includes an UE and the second communication apparatus includes a network device. As illustrated in FIG. 3, the method includes the following.

At 301, the network device transmits first configuration information, where the first configuration information includes RO information. Correspondingly, the UE receives the first configuration information.

The network device may transmit the first configuration information in a broadcast manner. Exemplarily, the first configuration information may be contained in an SIB. For example, the first configuration information is contained in SIB1. The RO information illustrated in embodiments of the disclosure may be understood as configuration information related to an RO resource, and the UE may determine an RO(s) in a PRACH period according to the RO information. The RO information includes RO time-domain resource configuration information, RO frequency-domain resource configuration information, and an association relationship between SSBs and ROs. The RO time-domain resource configuration information (i.e., a PRACH time-domain resource for transmitting/carrying a premble/Msg1, or a time-domain position of an RO) contains prach-ConfigurationIndex indication information, as illustrated in Table 1a.

Table 1a defines random access configurations for frequency range (FR) 1 (sub-6GHz) and random access configurations for paired spectrum/supplementary uplink. In Table 1a, $n_f$ represents a system frame number, *x* represents a PRACH configuration period, $N_t^{\mathrm{RA,slot}}$ represents the number of ROs within a PRACH slot, and $N_{\mathrm{dur}}^{\mathrm{RA}}$ represents a PRACH duration.

Table 1a

| PRACH configuration Index | Preamble format | $n_f$ mod x=y | | subframe number | Starting symbol | number of PRACH slots within a subframe | $N_t^{\mathrm{RA,slot}}$, number of time-domain ROs within a PRACH slot | $N_{\mathrm{dur}}^{\mathrm{RA}}$, PRACH duration |
| | | x | y | | | | | |
|---|---|---|---|---|---|---|---|---|
| 0 | 0 | 16 | 1 | 1 | 0 | - | - | 0 |
| 1 | 0 | 16 | 1 | 4 | 0 | - | - | 0 |
| 2 | 0 | 16 | 1 | 7 | 0 | - | - | 0 |
| 3 | 0 | 16 | 1 | 9 | 0 | - | - | 0 |
| 4 | 0 | 8 | 1 | 1 | 0 | - | - | 0 |
| 5 | 0 | 8 | 1 | 4 | 0 | - | - | 0 |
| 6 | 0 | 8 | 1 | 7 | 0 | - | - | 0 |
| 7 | 0 | 8 | 1 | 9 | 0 | - | - | 0 |
| 8 | 0 | 4 | 1 | 1 | 0 | - | - | 0 |
| 9 | 0 | 4 | 1 | 4 | 0 | - | - | 0 |
| 10 | 0 | 4 | 1 | 7 | 0 | - | - | 0 |
| 11 | 0 | 4 | 1 | 9 | 0 | - | - | 0 |

(continued)

| PRACH configuration Index | Preamble format | $n_f$ mod x=y | | subframe number | Starting symbol | number of PRACH slots within a subframe | $N_t^{RA,slot}$, number of time-domain ROs within a PRACH slot | $N_{dur}^{RA}$, PRACH duration |
|---|---|---|---|---|---|---|---|---|
| | | x | y | | | | | |
| 12 | 0 | 2 | 1 | 1 | 0 | - | - | 0 |
| 13 | 0 | 2 | 1 | 4 | 0 | - | - | 0 |
| 14 | 0 | 2 | 1 | 7 | 0 | - | - | 0 |
| 15 | 0 | 2 | 1 | 9 | 0 | - | - | 0 |
| 16 | 0 | 1 | 0 | 1 | 0 | - | - | 0 |
| 17 | 0 | 1 | 0 | 4 | 0 | - | - | 0 |
| 18 | 0 | 1 | 0 | 7 | 0 | - | - | 0 |
| 19 | 0 | 1 | 0 | 1,6 | 0 | - | - | 0 |
| 20 | 0 | 1 | 0 | 2,7 | 0 | - | - | 0 |
| ... | ... | ... | ... | ... | ... | ... | ... | ... |
| 109 | A1/B1 | 2 | 0 | 4 | 0 | 2 | 7 | 7 |
| ... | ... | ... | ... | ... | ... | ... | ... | ... |

For example, in the case where a PRACH configuration index indicated by the RO time-domain resource configuration information is 109, the following conditions exist. A preamble format is A1/B1. There is a time-domain RO (i.e., $n_f$ mod 2=0) every two system frames (i.e., 0, 2, 4, ...). A starting position of a time-domain RO in the 9-th subframe in a system frame starts from the 0-th orthogonal frequency division multiplexing (OFDM) symbol. There are 2 PRACH slots in the 9-th subframe and 7 ($N_t^{RA,slot} = 7$) time-domain ROs in each PRACH slot. An RACH duration is 7 ($N_{dur}^{RA} = 7$), i.e., 7 OFDM symbols are occupied.

The UE may determine a time-domain position of an RO according to the RO time-domain configuration information.

The RO frequency-domain resource configuration information (i.e., a PRACH frequency-domain resource for transmitting/carrying a premble/Msg1, or a frequency-domain position of an RO) contains a frequency-domain size of an RO (i.e., the number of physical resource blocks (PRBs) occupied by one RO), a starting frequency-domain position of an RO (msg1-FrequencyStart), and the number of frequency multiplexed ROs (msg1-FDM). The parameter msg1-FrequencyStart may be used to configure an offset from a starting frequency-domain position of an RO to a starting frequency-domain position of an initial bandwidth part (BWP) or the current active BWP. The parameter msg1-FDM may be used to configure the number of frequency multiplexed ROs.

The UE may determine the frequency-domain position of an RO according to the RO frequency-domain configuration information.

The association relationship between SSBs and ROs indicates the number of SSBs associated with each RO, X, where X may take a value from {1/8, 1/4, 1/2, 1, 2, 4, 8, 16}.

For example, in the case where the number of SSBs is 16, the number of SSBs associated with each RO is 2, and the number of frequency multiplexed ROs is 2, a PRACH period may be illustrated in FIG. 4a. It may be understood that FIG. 4a exemplarily illustrates a PRACH period. For another example, in the case where the number of SSBs is 4, the number of SSB(s) associated with each RO is 1/2, and the number of frequency multiplexed ROs is 2, a PRACH period may be illustrated in FIG. 4b. It may be understood that FIG. 4b exemplarily illustrates two PRACH periods.

It may be understood that the contents of the RO information illustrated above are merely exemplary and may not be understood as a limitation to embodiments of the disclosure.

In a possible implementation, the method illustrated in FIG. 3 includes operations at 302.

At 302, the network device transmits the second configuration information. Correspondingly, the UE obtains the second configuration information. The second configuration information indicates at least one first repetition number, and the at least one first repetition number includes the first target repetition number.

The at least one first repetition number indicated by the second configuration information may also be understood as a set of candidate values of the transmission number configured for the UE by the network device. For example, the at least one first repetition number is {n_1, n_2, ..., n_m}, where n_1 to n_m are positive integers. For example, N is a value ranging

from $n_1$ to $n_m$. The embodiments of the disclosure do not limit the specific values of $n_1$ to $n_m$. The embodiments of the disclosure also do not limit how to represent the at least one first repetition number. For example, the at least one first repetition number ranges from 1 to $N$. For another example, the at least one first repetition number is {1, 2, 4}. For another example, the at least one first repetition number is {1, 2, 3, 4}. For another example, the at least one first repetition number is {1, 2, 4, 6}. For another example, the at least one first repetition number is {2, 4, 6, 8}. For another example, the at least one first repetition number is {2, 3, 4, 5, 6, 7, 8}, etc. The specific value(s) of the at least one first repetition number is not listed.

Exemplarily, the network device may transmit the second configuration information via an SIB, higher-layer signaling, etc., where embodiments of the disclosure do not limit the specific manner in which the network device transmits the second configuration information.

In a possible implementation, resources corresponding to the $N$ ROs in the target RO group are consecutive in time domain, the target RO group is one of at least one RO group, and the at least one RO group is obtained according to the RO information and $N$. The target RO group is used to transmit the first message. Methods for determining the at least one RO group and the target RO group may be described below. Exemplarily, the method illustrated in FIG. 3 further includes operations at 303.

At 303, the UE obtains the at least one RO group by performing RO grouping according to $N$ and the RO information, where the at least one RO group includes the target RO group.

The resources corresponding to the $N$ ROs in each RO group are consecutive in the time domain. Prior to the operations at 303, the UE may determine $N$. Exemplarily, the UE may determine the first maximum repetition number among the at least one first repetition number indicated by the second configuration information as the number of ROs in the target RO group. For example, the case that the first maximum repetition number among the at least one first repetition number configured by the network device is determined as the value of $N$ may be specified by a protocol or agreed by both the network device and the UE. In another possible implementation, the network may configure the value of $N$ via higher-layer signaling. Exemplarily, the higher-layer signaling may be, for example, radio resource control (RRC) signaling.

After $N$ is determined, the UE may group ROs according to the value of $N$ and the RO information to obtain the at least one RO group. For example, the UE may group $N$ consecutive

ROs in the time domain into an RO group to obtain the at least one RO group. In the case where the number of ROs in the target RO group is the same as a value of the first maximum repetition number among at least one first repetition number, in such RO grouping manner, the UE may be allowed to transmit Msg1 over an RO group by using a value of any one of the at least one first repetition number configured by the network. In the case where the value of $N$ is configured by the network through higher-layer signaling, in such RO grouping manner, the UE is allowed to transmit Msg1 over an RO group by using a value of the first number of repeated transmission not greater than the value of $N$ indicated by the network.

The RO group illustrated in embodiments of the disclosure may satisfy at least one of the following.

1. Each SSB in the SSB candidate set actually transmitted by the network device has a correspondence with an RO group(s). That is, each SSB in the SSB candidate set actually transmitted by the network device is associated with one or more RO groups among the at least one RO group described above. For example, one RO group may correspond to one SSB. For another example, one RO group may correspond to multiple SSBs. For example, the target RO group illustrated in embodiments of the disclosure may correspond to at least one SSB (assumed as $M$ SSBs, where $M$ is an integer greater than 0). The $M$ SSBs include the target SSB, and the $M$ SSBs are SSBs in the SSB candidate set actually transmitted by the network device. It may be understood that the number of SSB(s) corresponding to one RO group may be determined by a parameter SSB-perRACH-occasion in a protocol, or may be indicated by a parameter additionally introduced in either system information or RRC signaling. It may be understood that, for illustration of the target SSB, reference may be made to the above content, which will not be described in detail herein. Exemplarily, referring to Table 1b below, it is assumed that the at least one RO group described above includes RO group 1, RO group 2, and RO group 3, where RO group 3 corresponds to one SSB (i.e., SSB4), RO group 1 corresponds to multiple SSBs (i.e., SSB0, SSB1, and SSB2), and RO group 2 corresponds to multiple SSBs (i.e., SSB2 and SSB3).

2. The at least one RO group is an RO group(s) within an association period between SSBs and ROs. For example, each SSB in the SSB candidate set actually transmitted by the network device is in a correspondence with an RO group(s) within the association period between SSBs and ROs. That is, each of all SSBs in the SSB candidate set actually transmitted by the network device is associated with one or more RO groups within the association period between SSBs and ROs.

3. The at least one RO group is first sorted in increasing order of frequency resource indexes (i.e., indexes of frequency-domain resources for RO groups), and then sorted in increasing order of time resource indexes (i.e., indexes of time-domain resources for RO groups).

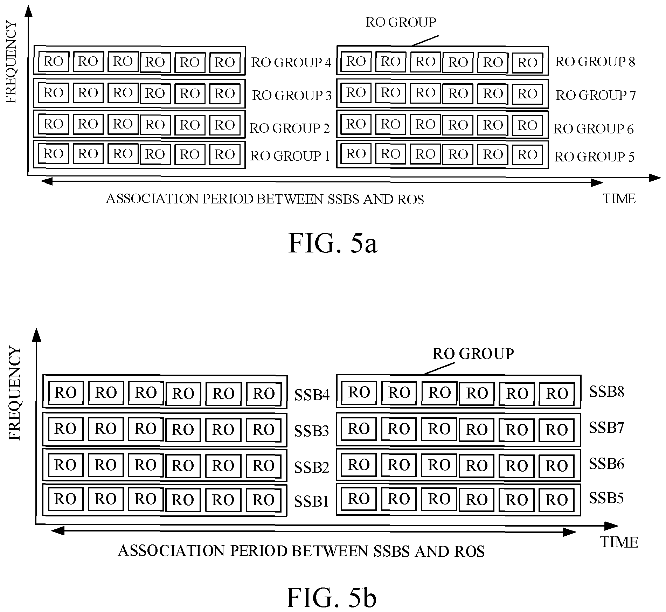

Exemplarily, assuming that an RO group has an index and assuming that a relatively high sorted RO group has a relatively low index, for a time-frequency resource position(s) of the sorted at least one RO group, reference may be made to FIG. 5a. It may be noted that the at least one RO group may be first sorted in the increasing order of the time resource indexes and then sorted in the increasing order of the frequency resource indexes, or may be sorted in some other sorting manners, which is not limited in the disclosure. The following is described by an example that the at least one RO group is first sorted in the increasing order of the frequency resource indexes and then sorted in the increasing order of the time resource indexes.

In embodiments of the disclosure, by sorting the at least one RO group in the order illustrated above, each RO group in the at least one RO group can be mapped to an SSB(s) in the order illustrated above. As for an order in which the SSB(s) is sorted, reference may be made to the following.

4. In the case where the SSBs in the SSB candidate set are mapped to the at least one RO group, the SSBs in the SSB candidate set are mapped to the at least one RO group in increasing order of indexes of the SSBs in the SSB candidate set.

According to the sorting manner of the at least one RO group and the sorting manner of the SSBs in the SSB candidate set illustrated above, the UE may be quickly informed of the correspondence between RO groups and SSBs according to the above sorting manner of the at least one RO group and the sorting manner of the SSBs, and then after the target SSB is determined, the UE may obtain the target RO group corresponding to the target SSB and further transmit Msg1 in the target RO group. Exemplarily, a mapping between RO groups and SSBs may include that the SSBs in the SSB candidate set actually transmitted by the network device sorted in the increasing order of the indexes of the SSBs correspond to the sorted at least one RO group in sequence from front to back. For example, assuming that the at least one RO group includes three RO groups, namely RO group 1, RO group 2, and RO group 3, and assuming that the network device actually transmits three SSBs, namely SSB0, SSB1, and SSB2, after the three RO groups are made to correspond to the three SSBs, it is possible that RO group 1 corresponds to SSB0, RO group 2 corresponds to SSB1, and RO group 3 corresponds to SSB2. For another example, assuming that the at least one RO group includes six RO groups, i.e., RO group 1 to RO group 6, assuming that the network device actually transmits three SSBs, namely SSB0, SSB1, and SSB2, and assuming that each RO group corresponds to 2 SSBs, after the six RO groups are made to correspond to the three SSBs, it is possible that both RO group 1 and RO group 2 correspond to SSB0, both RO group 3 and RO group 4 correspond to SSB1, and both RO group 5 and RO group 6 correspond to SSB2.

It may be noted that in the case where the SSBs in the SSB candidate set are mapped to the at least one RO group, the SSBs in the SSB candidate set may be mapped to the at least one RO group in decreasing order of the indexes of the SSBs in the SSB candidate set, which is not limited herein. Exemplarily, the number of SSB(s) corresponding to each RO group may be determined in one or more of the following manners.

Manner 1: the number of SSB(s) corresponding to each RO group may be determined via SSB-perRACH-occasion in a protocol.

Manner 2: the network device configures the number of SSB(s) corresponding to each RO group by means of a higher-layer parameter (e.g., SSB-perRACH-occasion group) (i.e., a higher-layer parameter is introduced to indicate the number of SSB(s) corresponding to each RO group).

Manner 3: in the case where the number of SSB(s) corresponding to each RO group is configured by a higher layer (e.g., SSB-perRACH-occasion group), the number of SSB(s) corresponding to each RO group configured by the higher layer is used. In the case where the higher layer does not configure the number of SSB(s) corresponding to each RO group, the number of SSB(s) corresponding to each RO group is determined according to SSB-perRACH-occasion in a protocol.

5. The target RO group corresponds to $M$ SSBs, the $M$ SSBs include the target SSB, and the $M$ SSBs are SSBs in an SSB candidate set transmitted by the second communication apparatus.

6. In the case where the $M$ SSBs are mapped to indexes of preambles corresponding to the target RO group, the $M$ SSBs are mapped to the indexes of the preambles corresponding to the target RO group in increasing order of the indexes of the preambles corresponding to the target RO group.

Exemplarily, as illustrated in Table 1b, the sorted at least one RO group obtained by the UE includes RO group 1, RO group 2, and RO group 3, and the sorted SSBs obtained by the UE include SSB0 to SSB4. According to the mapping illustrated above, RO group 1 may correspond to SSB0, SSB1, and SSB2, RO group 2 may correspond to SSB2 and SSB3, and RO group 3 may correspond to SSB4. Taking RO group 1 as an example, since RO group 1 corresponds to three SSBs, RO group 1 may correspond to SSB0, SSB1, and SSB2 in an increasing order of indexes of preambles corresponding to RO group 1. For example, preambles with indexes of 0-15 may correspond to SSB0, preambles with indexes of 16-31 may correspond to SSB1, and preambles with indexes of 32-47 may correspond to SSB2. It may be understood that the exemplary relationship between SSBs, RO groups, and preambles illustrated in Table 1b may not be understood as a limitation to embodiments of the disclosure.

Table 1b

| SSB in SSB candidate set | RO group (each RO group may correspond to 64 preambles) | preamble |
|---|---|---|
| SSB0 | RO group 1 | Preambles with indexes of 0-15 |
| SSB1 | | Preambles with indexes of 16-31 |
| SSB2 | | Preambles with indexes of 32-47 |
| | RO group 2 | Preambles with indexes of 0-7 |
| SSB3 | | Preambles with indexes of 8-15 |
| SSB4 | RO group 3 | Preambles with indexes of 0-31 |

A resource consisting of an RO group and a preamble illustrated in embodiments of the disclosure may be referred to as a PRACH resource group. In this case, a PRACH resource group may represent a preamble index (or a preamble sequence) and a time-frequency resource over which the UE transmits Msg1. Exemplarily, referring to Table 1b, RO group 1 and the preambles with indexes of 0-15 may form 16 PRACH resource groups.

The above mapping process may be comprehensively described as follows.

First: for different PRACH resource groups corresponding to the same RO group, the PRACH resource groups are sorted in increasing order of indexes of preambles corresponding to the PRACH resource groups.

Then: a frequency multiplexed RO group(s) is sorted in increasing order of frequency resource indexes in the frequency domain.

Finally: a time multiplexed RO group(s) is sorted in increasing order of time resource indexes in the time domain.

After the PRACH resource groups (i.e., RO groups and preambles) are sorted in the manners illustrated above, the PRACH resource groups are mapped to SSBs in increasing order of indexes of the SSBs.

For example, FIG. 5a and FIG. 5b are schematic diagrams illustrating a grouping situation of ROs provided in embodiments of the disclosure. As illustrated in FIG. 5a, for example, if the value of $N$ is equal to 6, the UE groups ROs to obtain at least one RO group illustrated in FIG. 5a. It may be understood that FIG. 5a only exemplarily illustrates eight RO groups (such as RO group 1 to RO group 8 illustrated in FIG. 5a, i.e., RO groups sorted first in frequency-domain order and then in time-domain order), which may not be understood as a limitation to embodiments of the disclosure. The RO groups correspond to SSBs in the SSB candidate set actually transmitted by the network device in increasing order of indexes of the SSBs, and then a mapping between the eight RO groups illustrated in FIG. 5a and the SSBs may be illustrated in FIG. 5b. In this case, since one SSB (e.g., SSB1) corresponds to one RO group (e.g., RO group 1), SSB1 has a mapping with all PRACH resource groups, where all the PRACH resource groups refer to PRACH resource groups consisting of RO group 1 and all preambles. It may be understood that, FIG. 5b does not illustrate identities of RO groups, for example, RO group 1 corresponds to SSB1, and RO group 2 corresponds to SSB2, and so on. As illustrated in FIG. 5b, one RO group is associated with one SSB, and the number of frequency multiplexed RO resources is 4, and thus the number of the SSBs in the SSB candidate set actually transmitted by the network device may be 8. It may be understood that FIG. 5b is illustrated with an example that one SSB corresponds to one RO group, which may not be understood as a limitation to embodiments of the disclosure. It may be understood that the eight SSBs illustrated in FIG. 5b are only examples and may not be understood as a limitation to embodiments of the disclosure.

For another example, assuming that SSBs in the SSB candidate set actually transmitted by the network device include SSB0 to SSB5, and assuming that the at least one RO group includes RO group 1 to RO group 3 (for determination of time-frequency resource positions of RO group 1 to RO group 3, reference may be made to the above), both SSB0 and SSB1 correspond to RO group 1, both SSB2 and SSB3 correspond to RO group 2, and both SSB4 and SSB5 correspond to RO group 3. After mapping, a mapping between SSBs and PRACH resource groups may be illustrated in Table 1c.

Table 1c

| SSB in SSB candidate set | PRACH resource group |
|---|---|
| SSB0 | PRACH resource group consisting of RO group 1 and preambles with indexes of 0-15 |
| SSB1 | PRACH resource group consisting of RO group 1 and preambles with indexes of 16-31 |
| SSB2 | PRACH resource group consisting of RO group 2 and preambles with indexes of 0-15 |
| SSB3 | PRACH resource group consisting of RO group 2 and preambles with indexes of 16-31 |
| SSB4 | PRACH resource group consisting of RO group 3 and preambles with indexes of 0-15 |

(continued)

| SSB in SSB candidate set | PRACH resource group |
|---|---|
| SSB5 | PRACH resource group consisting of RO group 3 and preambles with indexes of 16-31 |

At 304, the UE transmits the first message according to the target RO group and the first target repetition number. Correspondingly, the network device receives the first message.

The first target repetition number indicates the repetition number of the first message. The target RO group corresponds to the target SSB, and the target RO group is obtained according to the RO information. For illustration of the first target repetition number, the target SSB, and the target RO group, reference may be made to the above, which will not be described in detail herein. For specific illustration on that the UE groups RO groups, reference may be made to the above, which will not be described in detail herein.

It may be understood that the first message illustrated in embodiments of the disclosure may include Msg1 or a random access preamble. For other illustration of Msg1, reference may be made to FIG. 2, which will not be described in detail herein.

Exemplarily, when the UE transmits Msg1, the UE determines an SSB of which received signal quality is greater than a preset threshold (e.g., RSRP is greater than the preset threshold) as the target SSB according to measurement results of SSBs (e.g., RSRP of the SSBs). Then, according to the mapping between SSBs and RO groups, the UE determines the target RO group corresponding to the target SSB, and determines a range of indexes of preambles corresponding to the target SSB. Afterwards, the UE may randomly select an index from the range of the indexes of the preambles corresponding to the target SSB, and assigns a preamble corresponding to the index as a target preamble. For example, as illustrated in Table 1b, after the UE determines SSB0 as the target SSB, the UE may determine RO group 1 as the target RO group according to the correspondence illustrated in Table 1b, and then select a preamble from preambles with indexes of 0-15 corresponding to the target SSB as the target preamble (a preamble carried in the first message). Then the UE determines the suitable first target repetition number (which may also be referred to as the number of PRACH repeated transmissions) according to signal quality between the UE and the network device, ephemeris information, GNSS positioning information, etc. Finally, the UE transmits the target preamble (carried in the first message) according to the determined target RO group and the determined first target repetition number. For another example, as illustrated in Table 1b, after the UE determines SSB0 as the target SSB, RO group 1 and preambles with indexes of 0-15 may form 16 PRACH resource groups, and the target SSB corresponds to the 16 PRACH resource groups. The UE may determine a PRACH resource group among the 16 PRACH resource groups corresponding to the target SSB as a target PRACH resource group. Then the UE may determine the suitable first target repetition number according to signal quality between the UE and the network device, ephemeris information, GNSS positioning information, etc. Finally, the UE transmits a preamble (carried in the first message) corresponding to the target PRACH resource group according to the determined first target repetition number and an RO group corresponding to the determined target PRACH resource group. It may be understood that for illustration on that the UE determines the first target repetition number, reference may be made to the illustration of the first target repetition number above, which will not be described in detail herein.

It may be understood that the first target repetition number determined by the UE is not greater than the number of ROs in an RO group. Finally, the UE selects an RO for Msg1 transmission from the determined target RO group according to the determined first target repetition number. After the UE determines the first target repetition number, how the UE selects the RO for Msg1 transmission from the determined target RO group is realized in two manners as follows.

Manner 1: how the UE selects the RO for Msg1 transmission from the determined target RO group is realized via a predefined rule or configured by the network device. For example, it is specified that the UE transmits Msg1 using the first S ROs in the target RO group, where 8 represents the first target repetition number determined by the UE.

Manner 2: how the UE selects the RO for Msg1 transmission from the determined target RO group is realized by selecting, according to UE implementation, S ROs in the target RO group to transmit Msg1, where 8 represents the first target repetition number determined by the UE.

For example, $S$=4 means that the number of times the UE transmits Msg1 to the network device is 4. In this case, the UE selects S ROs among the $N$ ROs in the target RO group to repeatedly transmit Msg1. In this case, the number of times the network device receives Msg1 may also be 4. Therefore, Msg1 repeated transmissions may be realized to enhance the coverage range in which the UE transmits Msg1. It may be understood that measurement of signal quality between the UE and the network device illustrated in embodiments of the disclosure may be replaced by measuring RSRP, reference signal received quality (RSRQ), etc., which is not limited in embodiments of the disclosure.

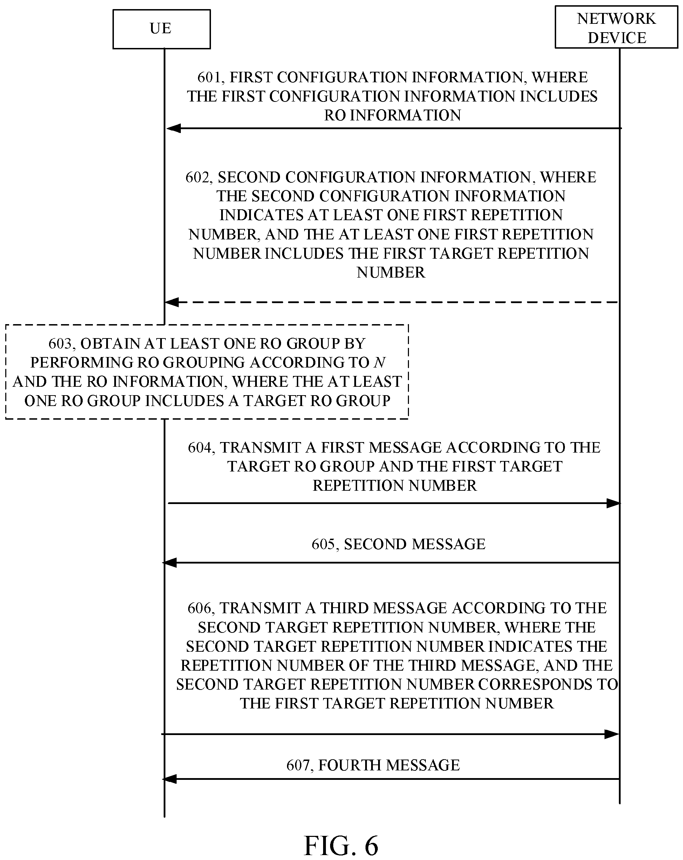

It may be understood that after the network device receives the first message, the network device may determine the target SSB according to an RO group (i.e., the target RO group) in which the first message is located. In the case where the target RO group corresponds to multiple SSBs, the network device may determine the target SSB with further reference to a received preamble(s). From this, the network device may be informed of a beam with relatively good signal quality between the network device and the UE according to the target SSB, and further the network device may transmit a second message according to the target SSB (as illustrated in FIG. 6). For example, the network device may receive in all RO groups the first message transmitted by the UE, and then determine the RO group in which the first message received by the network device is located, and thus determine the target SSB. Then the network device transmits the second message according to the target SSB.

It may be noted that the method illustrated in embodiments of the disclosure may include the operations at 301, the operations at 302, the operations at 303, and the operations at 304. Optionally, the method illustrated in embodiments of the disclosure may include the operations at 301, the operations at 302, and the operations at 304. For example, in the case where the UE has already obtained the at least one RO group, when the UE is to transmit the first message again, the UE may transmit the first message by directly using an RO in the target RO group among the at least one RO group previously obtained. Optionally, the method illustrated in embodiments of the disclosure may include the operations at 301 and the operations at 304. For example, the method illustrated in FIG. 3 may not include the operations at 302 in the case where the first target repetition number and $N$ are both defined by a standard.

In embodiments of the disclosure, a time-frequency resource (i.e., the target RO group) for transmitting the first message is determined via the target SSB, and the repetition number of the first message is determined by the first target repetition number, so that uplink repeated transmissions performed by the terminal device may be reasonably realized, and uplink coverage enhancement may be effectively realized.

FIG. 6 is another schematic flow chart illustrating a communication method provided in embodiments of the disclosure. For a communication system to which the method is applied, reference may be made to FIG. 1a and/or FIG. 1b, which will not be described in detail herein. As illustrated in FIG. 6, the method includes the following.

At 601, a network device transmits first configuration information, where the first configuration information includes RO information. Correspondingly, an UE receives the first configuration information.

In a possible implementation, the method illustrated in FIG. 6 may include operations at 602.

At 602, the network device transmits second configuration information. Correspondingly, the UE obtains the second configuration information. The second configuration information indicates at least one first repetition number, and the at least one first repetition number includes the first target repetition number.

In a possible implementation, the method illustrated in FIG. 6 may include operations at 603.

At 603, the UE obtains at least one RO group by performing RO grouping according to $N$ and the RO information, where the at least one RO group includes a target RO group.

At 604, the UE transmits a first message according to the target RO group and the first target repetition number. Correspondingly, the network device receives the first message.

It may be understood that for illustration of the operations at 601 to the operations at 604, reference may be made to FIG. 3, which will not be described in detail herein. Exemplarily, for illustration of the operations at 601, reference may be made to the operations at 301 illustrated in FIG. 3; for illustration of the operations at 602, reference may be made to the operations at 302 illustrated in FIG. 3; for illustration of the operations at 603, reference may be made to the operations at 303 illustrated in FIG. 3; and for illustration of the operations at 604, reference may be made to the operations at 304 illustrated in FIG. 3.

At 605, the network device transmits a second message to the UE, and correspondingly, the UE receives the second message from the network device.

In embodiments of the disclosure, the first message may be carried in the target RO group, and the number of ROs in the target RO group is $N$, where $N$ is an integer greater than 0. In the case where the network device receives the first message, the network device determines a target SSB according to an RO group in which the first message is carried, and then transmits the second message via the target SSB.

Exemplarily, the second message includes Msg2, i.e., an RAR message. For illustration of Msg2, reference may be made to FIG. 2, which will not be described in detail herein. Exemplarily, the UE may receive Msg2 scheduled via downlink control information (DCI). That is, after the UE transmits Msg1, the UE needs to monitor a physical downlink control channel (PDCCH) to obtain scheduling information (e.g., DCI) for Msg2, and then receives Msg2 according to the scheduling information (e.g., DCI).

At 606, the UE transmits a third message according to the second target repetition number. The second target repetition number indicates the repetition number of the third message, and the second target repetition number corresponds to the first target repetition number. Correspondingly, the network device receives the third message.

Exemplarily, the UE may determine the second target repetition number according to at least one second repetition number corresponding to the first target repetition number. The at least one second repetition number corresponding to the first target repetition number may be predefined by a standard, or configured by higher-layer signaling, or configured for the UE by the network device via third configuration information.

In a possible implementation, a correspondence between the first repetition number and the second repetition number may be predefined by the standard, i.e., at least one second repetition number corresponding to each first repetition number may be predefined by the standard.

In another possible implementation, before the operations at 606, the method illustrated in FIG. 6 further includes the following. The network device transmits the third configuration information. The third configuration information is used to configure a correspondence between each first repetition number among the at least one first repetition number and the second repetition number. A value of each first repetition number corresponds to at least one second repetition number. That is, the network device may configure the at least one second repetition number corresponding to the value of each first repetition number through the third configuration information. Correspondingly, the UE receives the third configuration information. It may be understood that the first repetition number illustrated above includes the first target repetition number.

It may be understood that, according to the at least one second repetition number corresponding to each first repetition number, the UE may be informed of at least one second repetition number corresponding to the first target repetition number. That is, after the UE obtains the at least one second repetition number corresponding to each first repetition number, and after the UE determines the first target repetition number from the at least one first repetition number indicated by the second configuration information, the UE determines the at least one second repetition number corresponding to the first target repetition number according to the at least one second repetition number corresponding to the first target repetition number.

In yet another possible implementation, before the operations at 606, the method illustrated in FIG. 6 further includes the following. The network device transmits indication information to the UE, and the UE receives the indication information. The indication information indicates the second target repetition number among the at least one second repetition number corresponding to the first target repetition number.

The indication information illustrated above may be realized in the following manners.

In the first manner, the indication information is carried in Msg2. For example, the network device may carry the indication information in Msg2, and the UE determines the second target repetition number according to the indication information. For example, the indication information may indicate the second target repetition number corresponding to the first target repetition number. For another example, the indication information may indicate multiple second repetition number corresponding to the first target repetition number, and thus the UE may determine the second repetition number from the multiple second repetition number as the second target repetition number.

In the second manner, the indication information is carried in DCI. The UE may determine the second target repetition number from the at least one repetition number corresponding to the first target repetition number according to a modulation and coding scheme (MCS) indicator field in the DCI via which Msg2 is scheduled. Exemplarily, the UE may determine the second target repetition number from the at least one repetition number corresponding to the first target repetition number according to the MCS indicator field in DCI 1-0 via which Msg2 is scheduled (i.e., the UE determines the number of Msg3 repeated transmissions from multiple candidate number of Msg3 repeated transmissions corresponding to the number of PRACH repeated transmissions) as the second target repetition number.

For example, in the case where the at least one first repetition number indicated by the second configuration information is {1, 2, 4}, the first target repetition number determined by the UE is 2, and the at least one second repetition number corresponding to the first target repetition number is {2, 3, 4, 6}, it is indicated that the UE may determine one second target repetition number from the candidate values {2, 3, 4, 6}. For another example, in the case where the first target repetition number determined by the UE is 4, and the at least one second repetition number corresponding to that first target repetition number is {4, 6, 8, 10}, it is indicated that the UE may determine one second target repetition number from the candidate values of {4, 6, 8, 10}. That is, candidate values of the number of Msg3 (or PUSCH) repeated transmissions corresponding to each first repetition number may be predefined.

For example, a mapping between the number of PRACH repeated transmissions (i.e., the first repetition number) and the number of Msg3 repeated transmissions (i.e., the second repetition number corresponding to the first repetition number) is illustrated in Table 2. The UE determines candidate values of the number of Msg3 repeated transmissions according to a configured value of the first target repetition number. It may be understood that the contents illustrated in Table 2 may be predefined by a standard or preconfigured by the network device, etc., which is not limited in embodiments of the disclosure. Exemplarily, as can be seen from Table 2, in embodiments of the disclosure, the first repetition number corresponds to the second repetition number, and thus the UE may obtain candidate values of the second target repetition number according to the first target repetition number determined by the UE. Therefore, compared with the case that the UE obtains all second repetition number, many values may be indicated via relatively few bits with the aid of the indication information illustrated in embodiments of the disclosure. For example, the indication information indicates the second repetition number corresponding to the first target repetition number, and thus the UE may determine the second target repetition number, thereby effectively reducing signaling overhead.

Table 2

| The number of PRACH repeated transmissions | Candidate value of the number of Msg3 (PUSCH) repeated transmissions |
| --- | --- |
| 1 | 1, 2, 3, 4 |
| 2 | 2, 3, 4, 6 |
| 4 | 4, 6, 8, 10 |

Methods in which the UE determines the second target repetition number from the at least one second repetition number corresponding to the first target repetition number may be illustrated below.

First, the UE may randomly determine the second target repetition number from the at least one second repetition number corresponding to the first target repetition number.

Second, the UE may determine the second target repetition number from the at least one second repetition number corresponding to the first target repetition number according to signal quality between the UE and the network device.

Third, the UE may determine the second target repetition number from the at least one second repetition number corresponding to the first target repetition number according to ephemeris information.

Fourth, the UE may determine the second target repetition number from the at least one second repetition number corresponding to the first target repetition number according to position information. For another example, the UE may determine the second target repetition number from the at least one second repetition number corresponding to the first target repetition number according to ephemeris information and a GNSS. It may be understood that for the methods in which the UE determines the second target repetition number from the at least one second repetition number corresponding to the first target repetition number, reference may be made to the illustration on that the UE determines the first target repetition number, which will not be described in detail herein.

It may be understood that the value of the number of PRACH repeated transmissions illustrated in Table 1b is only exemplary, and the number of Msg3 repeated transmissions corresponding to the number of PRACH repeated transmissions is only exemplary, which may not be understood as a limitation to embodiments of the disclosure.

It may be understood that the above is illustrated by taking an example that one first repetition number corresponds to multiple second repetition number. However, in embodiments of the disclosure, there are also the following schemes. In the case where one first repetition number corresponds to one second repetition number, in this case, the UE may directly determine the second target repetition number according to the second repetition number corresponding to the first target repetition number. That is, the second target repetition number is one second repetition number corresponding to the first target repetition number. That is, in the case where a value of one number of PRACH repeated transmissions corresponds to a candidate value of one number of Msg3 repeated transmissions, the UE directly determines the candidate value of the number of Msg3 repeated transmissions (i.e., the second target repetition number) according to the determined value of the number of PRACH repeated transmissions (i.e., the first target repetition number).

At 607, the network device transmits a fourth message to the UE, and correspondingly, the UE receives the fourth message from the network device.

Exemplarily, the fourth message may include Msg4 or a contention resolution message. For illustration of Msg4, reference may be made to FIG. 2, which will not be described in detail herein.

In embodiments of the disclosure, by determining the time-frequency resource (i.e., the target RO group) for transmitting the first message via the target SSB, and by determining the repetition number (i.e., the first target repetition number) for transmitting the first message, uplink repeated transmissions performed by the terminal device may be reasonably realized, and uplink coverage enhancement may be effectively realized. Furthermore, each first target repetition number corresponds to one or more transmission numbers, and thus the one or more transmission numbers corresponding to each first target repetition number are taken as a candidate value(s) of the second target repetition number, so that not only is it possible to indicate many values via relatively few bits and reduce signaling overhead, but also reasonably realize uplink repeated transmissions performed by the terminal device according to the second target repetition number.

It may be understood that in various embodiments illustrated above, for implementations not described in detail in one embodiment, reference may be made to other embodiments.

The following will introduce a communication apparatus provided in embodiments of the disclosure.

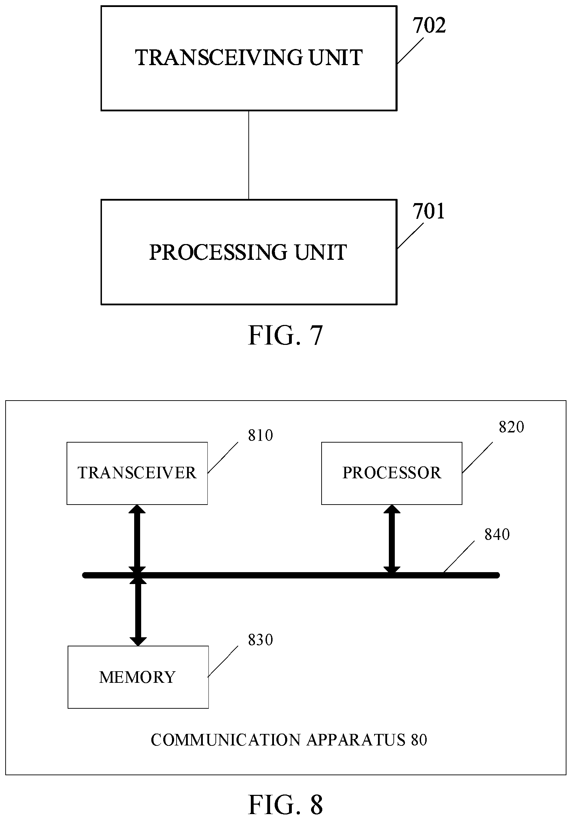

In the disclosure, functional modules may be divided for the communication apparatus according to the foregoing method embodiments. For example, each functional module may be divided according to each function, and two or more functions may be integrated in one processing module. The above-mentioned integrated module may be implemented in the form of hardware or software functional modules. It may be noted that the division of modules in the disclosure is schematic, and is merely a logical function division, and there may be other division manners in actual implementation. The following will describe in detail a communication apparatus provided in embodiments of the disclosure with reference to FIGs. 7 to 9.

FIG. 7 is a schematic structural diagram illustrating a communication apparatus provided in embodiments of the disclosure. As illustrated in FIG. 7, the communication apparatus includes a processing unit 701 and a transceiving unit 702.

In some embodiments of the disclosure, the communication apparatus may be the terminal device or UE illustrated above, or a chip disposed in the terminal device. That is, the communication apparatus may be configured to perform the operations or functions performed by the terminal device or UE in the above method embodiments.

The transceiving unit 702 is configured to obtain first configuration information (which may also be understood as that the transceiving unit 702 is configured to receive the first configuration information). The first configuration information includes RO information, and the RO information is used to determine at least an RO group. The processing unit 701 is configured to transmit a first message according to a target RO group and the first target repetition number via the transceiving unit 702. The target RO group corresponds to a target SSB. The number of ROs in the target RO group is $N$, $N$ is greater than or equal to the first target repetition number, and $N$ is an integer greater than 0.

In a possible implementation, the transceiving unit 702 is further configured to obtain second configuration information. The second configuration information indicates at least one first repetition number, and the first target repetition number is one repetition number among the at least one first repetition number.

In a possible implementation, the number of ROs in the target RO group is the same value as the maximum repetition number among the at least one first repetition number.

In a possible implementation, the processing unit 701 is further configured to obtain at least one RO group by performing RO grouping according to $N$ and the RO information. Resources corresponding to $N$ ROs in each RO group are consecutive in the time domain. The target RO group is one of the at least one RO group.

In a possible implementation, the transceiving unit 702 is further configured to: receive a second message from a network device; transmit a third message according to the second target repetition number, where the second target repetition number represents the repetition number of the third message, and the second target repetition number corresponds to the first target repetition number; and receive a fourth message from the network device.

In a possible implementation, the second target repetition number is one of at least one second repetition number corresponding to the first target repetition number.

In a possible implementation, the transceiving unit 702 is further configured to obtain third configuration information. The third configuration information is used to configure a correspondence between a value of each first repetition number among at least one first repetition number and a value of the second repetition number, and the value of each first repetition number corresponds to at least one value of at least one second repetition number.

In a possible implementation, the transceiving unit 702 is further configured to receive indication information. The indication information indicates the second target repetition number among the at least one second repetition number corresponding to the first target repetition number.

In a possible implementation, the processing unit 701 is further configured to determine the second target repetition number from the at least one second repetition number corresponding to the first target repetition number according to the indication information.

It may be understood that the specific illustration of the transceiving unit and processing unit illustrated in embodiments of the disclosure is only an example. For the specific functions or operations of the transceiving unit and the processing unit, reference may be made to the above method embodiments, which will not be described in detail herein. Exemplarily, the processing unit and the transceiving unit may also be configured to perform the method illustrated in at least one of FIGs 2, 3, and 6.

Referring to FIG. 7 again, in other embodiments of the disclosure, the communication apparatus may be the network device illustrated above or a chip disposed in the network device. That is, the communication apparatus may be configured to perform the operations or functions performed by the network device in the above method embodiments.

The transceiving unit 702 is configured to transmit first configuration information. The first configuration information includes RO information, and the RO information is used to determine at least a target RO group. The transceiving unit 702 is further configured to receive a first message. The first message is carried in the target RO group, the number of ROs in the target RO group is $N$, and $N$ is an integer greater than 0. The processing unit 701 is configured to determine a target SSB according to the target RO group. The target SSB corresponds to the target RO group. The transceiving unit 702 is further configured to transmit a second message according to the target SSB.

In a possible implementation, the transceiving unit 702 is further configured to transmit second configuration information. The second configuration information indicates at least one first repetition number, and the at least one first repetition number is used to determine the repetition number of the first message.

In a possible implementation, the transceiving unit 702 is further configured to receive a third message and transmit a fourth message.

In a possible implementation, the transceiving unit 702 is further configured to transmit third configuration information. The third configuration information is used to configure a correspondence between a value of each first repetition number among the at least one first repetition number and a value of the second repetition number. The correspondence between the value of each first repetition number among the at least one first repetition number and the value of the second repetition number is used to determine the repetition number of the third message.

In a possible implementation, the transceiving unit 702 is further configured to transmit indication information. The indication information indicates the second target repetition number among at least one second repetition number corresponding to the first target repetition number. The first target repetition number is the repetition number of the first message, and the second target repetition number is the repetition number of the third message.

It may be understood that the specific illustration of the transceiving unit and processing unit illustrated in embodiments of the disclosure is only an example. For the specific functions or operations of the transceiving unit and the processing unit, reference may be made to the above method embodiments, which will not be described in detail herein. Exemplarily, the processing unit and the transceiving unit may also be configured to perform the method illustrated in at least one of FIGs 2, 3, and 6.

In embodiments of the disclosure, for the illustration of the first configuration information, the second configuration information, the third configuration information, the first message, the second message, the third message, the fourth message, the first target repetition number, the second target repetition number, the target RO group, etc., reference may also be made to the introduction in the foregoing method embodiments, which will not be described in detail herein.

The above introduces the communication apparatus in embodiments of the disclosure, and the following introduces the possible product forms of the communication apparatus. It may be understood that any form of product that possesses the functions of the communication apparatus described in FIG. 7 above falls within the scope of protection of embodiments of the disclosure. It may also be understood that the following introduction is only an example and does not limit the product form of the communication apparatus in embodiments of the disclosure.

In one possible implementation, in the communication apparatus illustrated in FIG. 7, the processing unit 701 may be one or more processors, the transceiving unit 702 may be a transceiver, or the transceiving unit 702 may be a transmitting unit and a receiving unit, where the transmitting unit may be a transmitter and the receiving unit may be a receiver. The transmitting unit and the receiving unit are integrated into one device, such as a transceiver. In embodiments of the disclosure, the processor and the transceiver may be coupled, and the connection method for the processor and the transceiver is not limited in embodiments of the disclosure.

As illustrated in FIG. 8, a communication apparatus 80 includes one or more processors 820 and a transceiver 810.

Exemplarily, when the communication apparatus is configured to perform the operations, methods, or functions performed by the terminal device above, the transceiver 810 is configured to obtain first configuration information (which may also be understood as that the transceiver 810 is configured to receive the first configuration information). The first configuration information includes RO information. The processor 820 is configured to transmit a first message according to a target RO group and the first target repetition number.

In a possible implementation, the transceiver 810 is further configured to obtain second configuration information. The second configuration information indicates at least one first repetition number, and the first target repetition number is one repetition number among the at least one first repetition number.

In a possible implementation, the processor 820 is further configured to obtain at least one RO group by performing RO grouping according to $N$ and the RO information.

In a possible implementation, the transceiver 810 is further configured to: receive a second message from a network device; transmit a third message according to the second target repetition number, where the second target repetition number represents the repetition number of the third message, and the second target repetition number corresponds to the first target repetition number; and receive a fourth message from the network device.

In a possible implementation, the transceiver 810 is further configured to obtain third configuration information. The third configuration information is used to configure a correspondence between a value of each first repetition number among at least one first repetition number and a value of the second repetition number.

In a possible implementation, the transceiver 810 is further configured to receive indication information. The indication information indicates the second target repetition number among the at least one second repetition number corresponding to the first target repetition number.

In a possible implementation, the processor 820 is configured to determine the second target repetition number from the at least one second repetition number corresponding to the first target repetition number according to the indication information.

It may be understood that for the specific illustration of the transceiver 810 and the processor 820, reference may be made to the above method embodiments, or made to the illustration of the processing unit 701 and the transceiving unit 702 in the FIG. 7, which will not be described in detail herein.

Exemplarily, when the communication apparatus is configured to perform the operations, methods, or functions performed by the network device above, the transceiver 810 is configured to transmit first configuration information. The first configuration information includes RO information. The transceiver 810 is further configured to receive a first message. The first message is carried in a target RO group, the number of ROs in the target RO group is $N$, and $N$ is an integer greater than 0. The processor 820 is configured to determine a target SSB according to the target RO group. The target SSB corresponds to the target RO group. The transceiver 810 is further configured to transmit a second message according to the target SSB.

In a possible implementation, the transceiver 810 is further configured to transmit second configuration information. The second configuration information indicates at least one first repetition number, and the at least one first repetition number is used to determine the repetition number of the first message.

In a possible implementation, the transceiver 810 is further configured to receive a third message and transmit a fourth message.

In a possible implementation, the transceiver 810 is further configured to transmit third configuration information. The third configuration information is used to configure a correspondence between a value of each first repetition number among the at least one first repetition number and a value of the second repetition number. The correspondence between the value of each first repetition number among the at least one first repetition number and the value of the second repetition number is used to determine the repetition number of the third message.

In a possible implementation, the transceiver 810 is further configured to transmit indication information. The indication information indicates the second target repetition number among at least one second repetition number corresponding to the first target repetition number. The first target repetition number is the repetition number of the first message, and the second target repetition number is the repetition number of the third message.

In embodiments of the disclosure, for the illustration of the first configuration information, the second configuration information, the third configuration information, the first message, the second message, the third message, the fourth message, the first target repetition number, the second target repetition number, the target RO group, etc., reference may also be made to the introduction in the foregoing method embodiments, which will not be described in detail herein.

It may be understood that for specific illustration of the processor and the transceiver, reference may also be made to the introduction of the processing unit and the transceiving unit illustrated in FIG. 7, which will not be described in detail herein.

In various implementations of the communication apparatus illustrated in FIG. 8, the transceiver may include a receiver and a transmitter. The receiver is configured to perform the receiving function (or operation), and the transmitter is configured to perform the transmitting function (or operation). The transceiver is configured to perform communication with other devices/apparatuses through transmission media.

Optionally, the communication apparatus 80 may further include one or more memories 830 configured to store program instructions and/or data, etc. The memory 830 and the processor 820 are coupled. The coupling in embodiments of the disclosure refers to indirect coupling or communication connection between apparatuses, units, or modules, which may be in the form of electrical, mechanical, or other forms, and used for information exchange between apparatuses, units, or modules. The processor 820 may operate in cooperation with the memory 830. The processor 820 can execute the program instructions stored in the memory 830. Optionally, at least one of the above one or more memories may be included in the processor.

The specific connection medium between the transceiver 810, the processor 820, and the memory 830 is not limited in embodiments of the disclosure. In embodiments of the disclosure, the memory 830, the processor 820, and the transceiver 810 are connected via a bus 840 in FIG. 8. The bus is expressed by a thick line in FIG. 8. The connection manner between other components is only for illustrative purposes and is not limited thereto. The bus may be classified into an address bus, a data bus, a control bus, etc. For ease of representation, only one thick line is used in FIG. 8, but it does not indicate that there is only one bus or one type of bus.

In embodiments of the disclosure, the processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, operations, and logic blocks disclosed in embodiments may be implemented or executed. The general-purpose processor may be a microprocessor or any conventional processor or the like. The operations of the method disclosed in embodiments may be directly implemented as a hardware processor, or may be performed by hardware and software modules in the processor.

In embodiments of the disclosure, the memory may include, but is not limited to, a non-volatile memory such as a hard disk drive (HDD) or a solid-state drive (SSD), a random access memory (RAM), an erasable programmable read-only memory (EPROM), a read-only memory (ROM), or a compact disc ROM (CD-ROM), and so on. The memory is any one storage medium that may be configured to carry or store program codes in the form of instructions or data structures and may be read and/or written by a computer (such as the communication apparatus illustrated in the disclosure), which is not limited thereto. The memory in embodiments of the disclosure may also be a circuit or any other apparatus capable of implementing storage functions and configured to store program instructions and/or data.

For example, the processor 820 is mainly configured to process communication protocols and communication data, control the entire communication apparatus, execute software programs, and process data of software programs.

The memory 830 is mainly configured to store software programs and data. The transceiver 810 may include a control circuit and an antenna. The control circuit is mainly configured to convert a baseband signal to a radio frequency (RF) signal and process an RF signal. The antenna is mainly configured to transmit and receive RF signals in the form of electromagnetic waves. An input/output apparatus, such as a touch screen, a display screen, a keyboard, etc., is mainly configured to receive data input by a user and configured to output data to the user.

After the communication apparatus is on, the processor 820 can read the software programs in the memory 830, interpret and execute the instructions of the software programs, and process the data of the software programs. When data needs to be transmitted wirelessly, the processor 820 performs baseband processing on data to-be-transmitted and outputs a baseband signal to an RF circuit. The RF circuit performs baseband processing on the baseband signal and transmits an RF signal out in the form of electromagnetic waves through an antenna. When data is configured to transmitted to the communication apparatus, the RF circuit receives the RF signal through the antenna, converts the RF signal into the baseband signal, and outputs the baseband signal to the processor 820. The processor 820 converts the baseband signal into data and processes the data.

In another implementation, the RF circuit and the antenna may be set separately from the processor performing baseband processing. For example, in a distributed scenario, the RF circuit and the antenna may be arranged remotely from the communication apparatus.

It may be understood that the communication apparatus illustrated in embodiments of the disclosure may also have more elements than that in FIG. 8, which is not limited herein. The methods performed by the processor and the transceiver illustrated above are only examples, and for the specific operations performed by the processor and the transceiver, reference may be made to the methods introduced above.

In another possible implementation, in the communication apparatus illustrated in FIG. 7, the processing unit 701 may be one or more logic circuits, and the transceiving unit 702 may be an input/output interface, which may also be referred to as a communication interface, an interface circuit, or an interface, etc. Optionally, the transceiving unit 702 may also be a transmitting unit and a receiving unit. The transmitting unit may be an output interface and the receiving unit may be an input interface. The transmitting unit and the receiving unit are integrated into one unit, such as an input-output interface. The processing unit 701 may be implemented as a logic circuit, and the transceiving unit 702 may be implemented as an interface. The logic circuit may be a chip, a processing circuit, an integrated circuit, or a chip of a system on chip (SoC), etc., and the interface may be a communication interface, an input-output interface, a pin, etc.

In embodiments of the disclosure, the logic circuit and the interface may be coupled to each other. The specific connection manners for the logic circuit and the interface are not limited in embodiments of the disclosure.

Exemplarily, when the communication apparatus is configured to perform the methods, functions, or operations performed by the terminal device above, the interface is configured to obtain first configuration information (which may also be understood as that the interface is configured to receive the first configuration information). The first configuration information includes RO information. The logic circuit is configured to transmit a first message according to a target RO group and the first target repetition number via the interface.

In a possible implementation, the interface is further configured to obtain second configuration information. The second configuration information indicates at least one first repetition number, and the first target repetition number is one repetition number among the at least one first repetition number.

In a possible implementation, the logic circuit is further configured to obtain at least one RO group by performing RO grouping according to $N$ and the RO information.

In a possible implementation, the interface is further configured to: receive a second message from a network device; transmit a third message according to the second target repetition number, where the second target repetition number represents the repetition number of the third message, and the second target repetition number corresponds to the first target repetition number; and receive a fourth message from the network device.

In a possible implementation, the interface is further configured to obtain third configuration information. The third configuration information is used to configure a correspondence between a value of each first repetition number among at least one first repetition number and a value of the second repetition number.

In a possible implementation, the interface is further configured to receive indication information. The indication information indicates the second target repetition number among the at least one second repetition number corresponding to the first target repetition number.

In a possible implementation, the logic circuit is further configured to determine the second target repetition number from the at least one second repetition number corresponding to the first target repetition number according to the indication information.

Exemplarily, when the communication apparatus is configured to perform the methods, functions, or operations performed by the network device above, the interface is configured to transmit first configuration information. The first configuration information includes RO information. The interface is further configured to receive a first message. The first message is carried in a target RO group, the number of ROs in the target RO group is $N$, and $N$ is an integer greater than 0. The logic circuit is configured to determine a target SSB according to the target RO group. The target SSB corresponds to the target RO group. The interface is further configured to transmit a second message according to the target SSB.

In a possible implementation, the interface is further configured to transmit second configuration information. The second configuration information indicates at least one first repetition number, and the at least one first repetition number is used to determine the repetition number of the first message.

In a possible implementation, the interface is further configured to receive a third message and transmit a fourth message.

In a possible implementation, the interface is further configured to transmit third configuration information. The third configuration information is used to configure a correspondence between a value of each first repetition number among the at least one first repetition number and a value of the second repetition number. The correspondence between the value of each first repetition number among the at least one first repetition number and the value of the second repetition number is used to determine the repetition number of the third message.

In a possible implementation, the interface is further configured to transmit indication information. The indication information indicates the second target repetition number among at least one second repetition number corresponding to the first target repetition number. The first target repetition number is the repetition number of the first message, and the second target repetition number is the repetition number of the third message.

It may be understood that the communication apparatus illustrated in embodiments of the disclosure may perform the method provided in embodiments of the disclosure in the form of hardware, or in the form of software, which is not limited herein.

In embodiments of the disclosure, for the illustration of the first configuration information, the second configuration information, the third configuration information, the first message, the second message, the third message, the fourth message, the first target repetition number, the second target repetition number, the target RO group, etc., reference may also be made to the introduction in the foregoing method embodiments, which will not be described in detail herein.

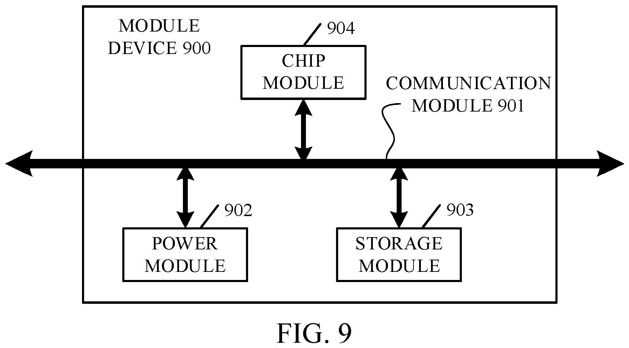

FIG. 9 is a schematic structural diagram illustrating a module device provided in embodiments of the disclosure. As illustrated in FIG. 9, the module device 900 can perform the related operations of the communication apparatus in the foregoing method embodiments. The module device 900 includes a communication module 901, a power module 902, a storage module 903, and a chip module 904. The power module 902 is configured to power the module device. The storage module 903 is configured to store data and instructions. The communication module 901 is configured to perform internal communication of the module device, or is configured to perform communication between the module device and an external device. The chip module 904 may be configured to perform the communication methods illustrated in FIGs. 2, 3, and 6, as well as the operations performed in the related embodiments.

It may be understood that for specific illustration of the chip module, reference may also be made to FIG. 7, FIG. 8, etc., which will not be described in detail herein.

A wireless communication system is further provided in embodiments of the disclosure. The wireless communication system includes a terminal device and a network device. The terminal device and the network device may be configured to perform the method in any one of the foregoing embodiments.

In addition, a computer program is further provided in the disclosure. The computer program is configured to implement the operations and/or processing performed by the terminal device in the method provided in the disclosure.

A computer program is further provided in the disclosure. The computer program is configured to implement the operations and/or processing performed by the network device in the method provided in the disclosure.

A computer-readable storage medium is further provided in embodiments of the disclosure. The computer-readable storage medium is configured to store computer programs which, when running on a computer, enable the computer to perform the operations and/or processing performed by the terminal device in the method provided in the disclosure.

A computer-readable storage medium is further provided in embodiments of the disclosure. The computer-readable storage medium is configured to store computer programs which, when running on a computer, enable the computer to perform the operations and/or processing performed by the network device in the method provided in the disclosure.

A computer program product is further provided in embodiments of the disclosure. The computer program product includes computer programs or computer codes. When the computer programs or computer codes run on a computer, the operations and/or processing performed by the terminal device in the method provided in the disclosure may be performed.

A computer program product is further provided in embodiments of the disclosure. The computer program product includes computer programs or computer codes. When the computer programs or computer codes run on a computer, the operations and/or processing performed by the network device in the method provided in the disclosure may be performed. The computer-readable storage medium may be an internal storage unit of the terminal device in any one of the foregoing embodiments, such as a hard disk or a memory of a device. The computer-readable storage medium may also be an external storage device of the terminal device, such as a plug-in hard disk, a smart media card (SMC), a secure digital (SD) card, a flash card, etc. equipped on the device. Furthermore, the computer-readable storage medium may also include both an internal storage unit and an external storage device of the terminal device. The computer-readable storage medium is configured to store the computer programs as well as other programs and data required by the terminal device. The computer-readable storage medium may be further configured to temporarily store data that has been or will be output. The computer-readable storage medium may be any available medium that a computer can access, or a data storage device such as a server or data center that contains one or more sets of available media. The available medium may be a magnetic medium (such as a floppy disk, a hard disk, and a magnetic tape), an optical medium (such as a high-density digital video disc (DVD)), or a semiconductor medium. The semiconductor medium may be a solid-state drive.

All or part of the above embodiments may be implemented through software, hardware, firmware, or any other combination thereof. When implemented by software, all or part of the above embodiments may be implemented in the form of a computer program product. The computer program product includes one or more computer instructions or computer programs. When the computer instructions or computer programs are loaded and executed on a computer, all or part of the operations or functions of the embodiments of the disclosure are performed. The computer may be a general-purpose computer, a special-purpose computer, a computer network, or other programmable apparatuses. The computer instruction may be stored in a computer-readable storage medium, or transmitted from one computer-readable storage medium to another computer-readable storage medium. For example, the computer instruction may be transmitted from one website, computer, server, or data center to another website, computer, server, or data center in a wired manner or in a wireless manner.

It may be understood that, in various embodiments described herein, the magnitude of a sequence number of each process does not mean an order of execution, and the order of execution of each process may be determined by its function and an internal logic and shall not constitute any limitation to an implementation process of embodiments of the disclosure.

It may be understood that the methods, apparatuses, and systems disclosed in embodiments herein may also be implemented in various other manners. For example, the above apparatus embodiments are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be indirect coupling or communication connection through some interfaces, apparatuses, or units, and may be electrical, mechanical, or in other forms.

Separated assemblies as illustrated may or may not be physically separated. Assemblies displayed as units may or may not be physical units, and may reside at one location or may be distributed to multiple network units. Some or all of the units may be selectively adopted according to practical needs to achieve desired objectives of the disclosure.

In addition, various functional units described in embodiments herein may be integrated into one processing unit or may be present as a number of physically separated units, and two or more units may be integrated into one unit. The integrated unit may be implemented in the form of hardware or a software functional unit plus hardware.

The integrated units implemented as software functional units may be stored in a computer-readable storage medium. The software functional unit is stored in a storage medium and may include multiple instructions that enable a computing device (e.g., a personal computer, a server, etc.) to perform some operations of the methods described in various embodiments of the disclosure.

It may be understood by those of ordinary skill in the art that all or part of the processes in the methods of above embodiments may be accomplished by means of computer programs to instruct associated hardware. The program may be stored in a computer-readable storage medium. The programs may include the processes of the embodiments of the above methods during running. The storage medium may be a magnetic disk, an optical disk, an ROM, an RAM, etc.

The above embodiments are merely some embodiments of the disclosure, which cannot be used to limit the scope of the disclosure. Those of ordinary skills in the art may understand and implement all or part of the processes of the above embodiments, and the equivalent changes made in accordance with the claims of the disclosure still belong to the scope of the disclosure covered.

## Claims

1. A communication method, the method being applied to a first communication apparatus and comprising:

obtaining first configuration information, wherein the first configuration information comprises physical random access channel occasion (RO) information, and the RO information is used to determine at least a target RO group; and
transmitting a first message according to the target RO group and first target repetition number, wherein the target RO group corresponds to a target synchronization signal/physical broadcast channel (SS/PBCH) block (SSB), number of ROs in the target RO group is $N$, the first target repetition number is less than or equal to $N$, and $N$ is an integer greater than 0.

2. The method of claim 1, wherein prior to transmitting the first message according to the target RO group and the first target repetition number, the method further comprises:
obtaining second configuration information, wherein the second configuration information indicates at least one first repetition number, and the first target repetition number is one of the at least one first repetition number.

3. The method of claim 2, wherein the number of ROs in the target RO group is the same value as maximum repetition number among the at least one first repetition number.

4. The method of claim 1, wherein a value of $N$ is configured by a second communication apparatus.

5. The method of any one of claims 1 to 4, wherein resources corresponding to the $N$ ROs in the target RO group are consecutive in time domain, the target RO group is one of at least one RO group, and the at least one RO group is obtained according to the RO information and $N$.

6. The method of claim 5, wherein the at least one RO group is an RO group within an association period between SSBs and ROs.

7. The method of claim 5 or 6, wherein the target SSB is an SSB in an SSB candidate set transmitted by a second communication apparatus, and each SSB in the SSB candidate set transmitted by the second communication apparatus has a correspondence with an RO group.

8. The method of claim 7, wherein the at least one RO group is first sorted in increasing order of frequency resource indexes, and then sorted in increasing order of time resource indexes.

9. The method of claim 8, wherein SSBs in the SSB candidate set are mapped to the at least one RO group in increasing order of indexes of the SSBs in the SSB candidate set in the case where the SSBs in the SSB candidate set are mapped to the at least one RO group.

10. The method of any one of claims 1 to 9, wherein the target RO group corresponds to at least one SSB, wherein the at least one SSB comprises the target SSB, and the at least one SSB is at least one SSB in an SSB candidate set transmitted by a second communication apparatus.

11. The method of claim 10, wherein the at least one SSB is mapped to indexes of preambles corresponding to the target RO group in increasing order of the indexes of the preambles corresponding to the target RO group in the case where the at least one SSB is mapped to the indexes of the preambles corresponding to the target RO group.

12. The method of any one of claims 1 to 11, wherein the target RO group is determined according to the target SSB, and the target SSB is an SSB of which signal quality is greater than a preset threshold in measurement results of SSBs in an SSB candidate set transmitted to the first communication apparatus by a second communication apparatus.

13. The method of any one of claims 1 to 12, wherein the first target repetition number is obtained according to at least one of:
signal quality between the first communication apparatus and the second communication apparatus, ephemeris information, or position information.

14. The method of any one of claims 1 to 12, wherein the first target repetition number is configured by a second communication apparatus.

15. The method of any one of claims 1 to 14, further comprising:

receiving a second message from a second communication apparatus;
transmitting a third message according to second target repetition number, wherein the second target repetition number corresponds to the first target repetition number; and
receiving a fourth message from the second communication apparatus.

16. The method of claim 15, wherein the second target repetition number is a repetition number among at least one second repetition number corresponding to the first target repetition number.

17. The method of claim 16, wherein prior to transmitting the third message according to the second target repetition number, the method further comprises:
obtaining third configuration information, wherein the third configuration information is used to configure a correspondence between a value of each first repetition number among at least one first repetition number and a value of second repetition number, and the value of each first repetition number corresponds to at least one value of at least one second repetition number.

18. The method of claim 16 or 17, wherein prior to transmitting the third message according to the second target repetition number, the method further comprises:
receiving indication information, wherein the indication information indicates the second target repetition number among the at least one second repetition number corresponding to the first target repetition number.

19. The method of claim 18, wherein the indication information is carried in a modulation and coding scheme (MCS) indicator field in downlink control information (DCI) via which the second message is scheduled.

20. A communication method, the method being applied to a second communication apparatus and comprising:

transmitting first configuration information, wherein the first configuration information comprises physical random access channel (PRACH) occasion (RO) information, and the RO information is used to determine at least a target RO group;
receiving a first message, wherein the first message is carried in the target RO group, number of ROs in the target RO group is $N$, and $N$ is an integer greater than 0;
determining a target synchronization signal/physical broadcast channel (SS/PBCH) block (SSB) according to the target RO group, wherein the target SSB corresponds to the target RO group; and
transmitting a second message according to the target SSB.

21. The method of claim 20, further comprising:
transmitting second configuration information, wherein the second configuration information indicates at least one first repetition number, and the at least one first repetition number is used to determine repetition number of the first message.

22. The method of claim 21, wherein the number of ROs in the target RO group is the same value as maximum repetition number among the at least one first repetition number.

23. The method of claim 20 or 21, wherein a value of $N$ is configured by the second communication apparatus.

24. The method of any one of claims 20 to 23, wherein resources corresponding to the $N$ ROs in the target RO group are consecutive in time domain, the target RO group is one of at least one RO group, and the at least one RO group is obtained according to the RO information and $N$.

25. The method of claim 24, wherein the at least one RO group is an RO group within an association period between SSBs and ROs.

26. The method of claim 25, wherein the target SSB is an SSB in an SSB candidate set transmitted by the second communication apparatus, and each SSB in the SSB candidate set transmitted by the second communication apparatus has a correspondence with an RO group.

27. The method of any one of claims 24 to 26, wherein the at least one RO group is first sorted in increasing order of frequency resource indexes, and then sorted in increasing order of time resource indexes.

28. The method of claim 27, wherein SSBs in the SSB candidate set are mapped to the at least one RO group in increasing order of indexes of the SSBs in the SSB candidate set in the case where the SSBs in the SSB candidate set are mapped to the at least one RO group.

29. The method of any one of claims 20 to 28, wherein the target RO group corresponds to at least one SSB, wherein the at least one SSB comprises the target SSB, and the at least one SSB is at least one SSB in the SSB candidate set transmitted by the second communication apparatus.

30. The method of claim 29, wherein the at least one SSB is mapped to indexes of preambles corresponding to the target RO group in increasing order of the indexes of the preambles corresponding to the target RO group in the case where the at least one SSB is mapped to the indexes of the preambles corresponding to the target RO group.

31. The method of any one of claims 21 to 23, further comprising:
transmitting third configuration information, wherein the third configuration information is used to configure a correspondence between a value of each first repetition number among the at least one first repetition number and a value of second repetition number, and the correspondence between the value of each first repetition number among the at least one first repetition number and the value of the second repetition number is used to determine repetition number of a third message.

32. The method of claim 31, further comprising:
transmitting indication information, wherein the indication information indicates second target repetition number among at least one second repetition number corresponding to first target repetition number, the first target repetition number is the repetition number of the first message, and the second target repetition number is the repetition number of the third message.

33. The method of claim 32, wherein the indication information is carried in a modulation and coding scheme (MCS) indicator bit field in downlink control information (DCI) via which the second message is scheduled.

34. A communication apparatus comprising a unit configured to perform the method of any one of claims 1 to 19.

35. A communication apparatus comprising a unit configured to perform the method of any one of claims 20 to 33.

36. A communication apparatus, comprising a processor and a memory, the processor being connected to the memory, the memory being configured to store instructions, and the processor being configured to invoke the instructions to implement the method of any one of claims 1 to 19.

37. A communication apparatus, comprising a processor and a memory, the processor being connected to the memory, the memory being configured to store instructions, and the processor being configured to invoke the instructions to implement the method of any one of claims 20 to 33.

38. A chip, comprising a logic circuit and an interface, the logic circuit being coupled to the interface, the interface being configured to input and/or output a signal, and the logic circuit being configured to execute code instructions to perform the method of any one of claims 1 to 19.

39. A chip, comprising a logic circuit and an interface, the logic circuit being coupled to the interface, the interface being configured to input and/or output a signal, and the logic circuit being configured to execute code instructions to perform the method of any one of claims 20 to 33.

40. A module device, comprising:

a power module configured to power the module device;
a storage module configured to store data and instructions;
a communication module configured to perform internal communication of the module device, or configured to perform communication between the module device and an external device; and
a chip module configured to perform the method of any one of claims 1 to 19.

41. A module device, comprising:

a power module configured to power the module device;
a storage module configured to store data and instructions;
a communication module configured to perform internal communication of the module device, or configured to perform communication between the module device and an external device; and
a chip module configured to perform the method of any one of claims 20 to 33.

**42.** A computer-readable storage medium configured to store computer programs which, when running, enable the method of any one of claims 1 to 19 to be implemented.

**43.** A computer-readable storage medium configured to store computer programs which, when running, enable the method of any one of claims 20 to 33 to be implemented.

**44.** A communication system comprising a first communication apparatus and a second communication apparatus, the first communication apparatus being configured to perform the method of any one of claims 1 to 19, and the second communication apparatus being configured to perform the method of any one of claims 20 to 33.

TERMINAL
DEVICE 1

NETWORK
DEVICE

TERMINAL
DEVICE 2

TERMINAL
DEVICE 3

FIG. 1a

SATELLITE

TERMINAL
DEVICE

GROUND STATION

FIG. 1b

FIG. 2

```
┌──────┐                                          ┌──────────┐
│  UE  │                                          │ NETWORK  │
│      │                                          │  DEVICE  │
└──┬───┘                                          └────┬─────┘
   │                                                   │
   │  301, FIRST CONFIGURATION INFORMATION, WHERE      │
   │  THE FIRST CONFIGURATION INFORMATION INCLUDES     │
   │             RO INFORMATION                        │
   │◄──────────────────────────────────────────────── │
   │                                                   │
   │  302, SECOND CONFIGURATION INFORMATION, WHERE     │
   │     THE SECOND CONFIGURATION INFORMATION          │
   │     INDICATES AT LEAST ONE FIRST REPETITION       │
   │  NUMBER, AND THE AT LEAST ONE FIRST REPETITION    │
   │   NUMBER INCLUDES THE FIRST TARGET REPETITION     │
   │                  NUMBER                           │
   │◄ ─ ─ ─ ─ ─ ─ ─ ─ ─ ─ ─ ─ ─ ─ ─ ─ ─ ─ ─ ─ ─ ─ ─  │
```

303, OBTAIN AT LEAST ONE RO GROUP BY
PERFORMING RO GROUPING ACCORDING TO $N$
AND THE RO INFORMATION, WHERE THE AT LEAST
ONE RO GROUP INCLUDES A TARGET RO GROUP

304, TRANSMIT A FIRST MESSAGE ACCORDING TO THE
TARGET RO GROUP AND THE FIRST TARGET
REPETITION NUMBER

# FIG. 3

FIG. 4a

FIG. 4b

FIG. 5a

FIG. 5b

| UE | | NETWORK DEVICE |
|---|---|---|

601, FIRST CONFIGURATION INFORMATION, WHERE THE FIRST CONFIGURATION INFORMATION INCLUDES RO INFORMATION

602, SECOND CONFIGURATION INFORMATION, WHERE THE SECOND CONFIGURATION INFORMATION INDICATES AT LEAST ONE FIRST REPETITION NUMBER, AND THE AT LEAST ONE FIRST REPETITION NUMBER INCLUDES THE FIRST TARGET REPETITION NUMBER

603, OBTAIN AT LEAST ONE RO GROUP BY PERFORMING RO GROUPING ACCORDING TO $N$ AND THE RO INFORMATION, WHERE THE AT LEAST ONE RO GROUP INCLUDES A TARGET RO GROUP

604, TRANSMIT A FIRST MESSAGE ACCORDING TO THE TARGET RO GROUP AND THE FIRST TARGET REPETITION NUMBER

605, SECOND MESSAGE

606, TRANSMIT A THIRD MESSAGE ACCORDING TO THE SECOND TARGET REPETITION NUMBER, WHERE THE SECOND TARGET REPETITION NUMBER INDICATES THE REPETITION NUMBER OF THE THIRD MESSAGE, AND THE SECOND TARGET REPETITION NUMBER CORRESPONDS TO THE FIRST TARGET REPETITION NUMBER

607, FOURTH MESSAGE

FIG. 6

TRANSCEIVING UNIT  702

PROCESSING UNIT  701

FIG. 7

TRANSCEIVER  810

PROCESSOR  820

840

MEMORY  830

COMMUNICATION APPARATUS 80

FIG. 8

MODULE
DEVICE 900

904

CHIP
MODULE

COMMUNICATION
MODULE 901

902

POWER
MODULE

903

STORAGE
MODULE

FIG. 9

## INTERNATIONAL SEARCH REPORT

| International application No. |
| --- |
| **PCT/CN2023/073125** |

| A. | CLASSIFICATION OF SUBJECT MATTER |
| --- | --- |
| | H04W72/04(2023.01)i |

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 物理随机接入信道, 时机, 机会, 时隙, 重复, 重传, 传输, 次数, 同步信号块, 组, 集合, PRACH, RO, occasion, slot, repeat, times, SSB, set, group

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | WO 2022267984 A1 (HUAWEI TECHNOLOGIES CO., LTD.) 29 December 2022 (2022-12-29) description, page 1, line 20 to page 18, line 38 | 1-44 |
| X | WO 2021087978 A1 (LENOVO BEIJING LTD.) 14 May 2021 (2021-05-14) description, paragraphs [0022]-[0071] | 1-44 |
| X | WO 2021207925 A1 (GUANGDONG OPPO MOBILE COMMUNICATIONS CO., LTD.) 21 October 2021 (2021-10-21) description, page 1, paragraph 4 to page 11, paragraph 2 | 1-44 |
| A | WO 2022006851 A1 (GUANGDONG OPPO MOBILE COMMUNICATIONS CO., LTD.) 13 January 2022 (2022-01-13) entire document | 1-44 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 March 2023** | **04 May 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2023/073125**

| Patent document cited in search report | | | Publication date (day/month/year) | Patent family member(s) | | | Publication date (day/month/year) |
|---|---|---|---|---|---|---|---|
| WO | 2022267984 | A1 | 29 December 2022 | CN | 115580931 | A | 06 January 2023 |
| WO | 2021087978 | A1 | 14 May 2021 | US | 2022408491 | A1 | 22 December 2022 |
| | | | | EP | 4055972 | A1 | 14 September 2022 |
| WO | 2021207925 | A1 | 21 October 2021 | EP | 4138504 | A1 | 22 February 2023 |
| WO | 2022006851 | A1 | 13 January 2022 | CN | 115486194 | A | 16 December 2022 |

Form PCT/ISA/210 (patent family annex) (July 2022)